(19) Europäisches Patentamt
European Patent Office
Office européen des brevets

(11) EP 4 568 785 B1

(12) EUROPEAN PATENT SPECIFICATION

(45) Date of publication and mention of the grant of the patent:
**14.01.2026 Bulletin 2026/03**

(21) Application number: **23783308.2**

(22) Date of filing: **18.09.2023**

(51) International Patent Classification (IPC):
***B01J 35/64*** *(2024.01)* ***B01J 20/28*** *(2006.01)*
***B01J 37/08*** *(2006.01)*

(52) Cooperative Patent Classification (CPC):
**B01J 35/64; B01J 23/745; B01J 35/51; B01J 35/56; B01J 37/08**

(86) International application number:
**PCT/EP2023/075585**

(87) International publication number:
**WO 2024/061798 (28.03.2024 Gazette 2024/13)**

(54) **STRUCTURED OXYGEN CARRIER PRODUCT AND PREPARATION METHOD THEREOF**

STRUKTURIERTES SAUERSTOFFTRÄGERPRODUKT UND HERSTELLUNGSVERFAHREN DAFÜR

PRODUIT PORTEUR STRUCTURÉ D’OXYGÈNE ET SON PROCÉDÉ DE PRÉPARATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.09.2022 EP 22197422**

(43) Date of publication of application:
**18.06.2025 Bulletin 2025/25**

(73) Proprietor: **Technische Universität Graz**
**8010 Graz (AT)**

(72) Inventors:
- **HACKER, Viktor**
  **8042 Graz (AT)**
- **BOCK, Sebastian**
  **8530 Deutschlandsberg (AT)**
- **BLASCHKE, Fabio**
  **8020 Graz (AT)**

(74) Representative: **KLIMENT & HENHAPEL**
**Patentanwälte OG**
**Gonzagagasse 15/2**
**1010 Wien (AT)**

(56) References cited:
**US-A1- 2019 388 874** **US-A1- 2022 048 007**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

FIELD OF THE INVENTION

The invention relates to a structured oxygen carrier product that can be applied for chemical looping processes. The invention also relates to a method to prepare such a structured oxygen carrier product. Another aspect of the invention relates to a system comprising an oxygen carrier material as well as a porous support material, which system is required to prepare said structured oxygen carrier product according to the invention.

PRIOR ART

Chemical looping processes or comparable chemical processes for thermochemical energy storage use the application of suitable metal oxides as oxygen carriers in a chemical cycle. In the following, the term "chemical looping process" also refers to corresponding chemical processes for thermochemical energy storage.

The term "chemical looping" is generally used to refer to redox processes with a cyclic reduction step and oxidation step of different metal oxide materials with gaseous media at elevated temperatures of about 600°C to 1000°C or above. In a chemical looping process, the metal oxide exchanges oxygen between a reducing gas in a reduction step and an oxidising gas in an oxidation step. In such processes that can be used for example for the combustion of gaseous or solid feedstock such as different fossil fuels or biomass-based, alternative fuels, a solid metal oxide is used as an oxygen carrier for biomass combustion and gasification instead of air with the oxygen carrier being moved cyclically between two reaction zones.

Gaseous Carbon dioxide ($CO_2$) released in this combustion process can be easily and cost-effectively captured from the combustion exhaust gas and also made available as a high-quality lean gas for further processing. With the aid of chemical looping technology, energy production from biomass thus can even become $CO_2$-negative.

According to above-said chemical looping process mentioned by way of example, a reduction reaction and an oxidation reaction of fuel combustion are separated either spatially or in time to avoid mixing of the respective reductive and oxidative gaseous streams. This can be achieved by either a dual- or a multi-reactor configuration comprising a moving bed- or fluidized bed reactor system, or via a temporal shift of the gaseous media in a fixed bed reactor system. Within these respective reactor systems, a suitable metal oxide ($Me_xO_y$) as oxygen carrier is applied as oxygen-carrying intermediate, which metal oxide is periodically reduced ($Me_xO_{y-z}$) by the feedstock or fuel, respectively, during combustion in the presence of a feedstock material containing hydrogen ($H_2$) and/or carbon monoxide (CO), and which reduced metal oxide is regenerated ($Me_xO_y$) in an oxidative media in the presence of oxygen ($O_2$). This redox process can be indicated according to the following chemical equations (1), (2), wherein equation (1) refers to the respective reduction reaction and equation (2) refers to the respective oxidation reaction:

(1) $$Me_xO_y + z\ H_2/CO \rightarrow Me_xO_{y-z} + z\ H_2O/CO_2$$

(2) $$Me_xO_{y-z} + \frac{1}{2}\ z\ O_2 \rightarrow Me_xO_y$$

The purpose of this chemical looping technology may vary with the desired product. The aforesaid chemical looping combustion (CLC) process was proposed as technology to gain the heat of combustion while the gaseous fuel stream can be separated from the combustion air. Thus, via this CLC process the reductive and oxidative media can be separated to preferably obtain the pure product gas streams carbon dioxide ($CO_2$) and steam ($H_20$) from feedstock or fuel oxidation according to equation (1), and depleted air ($O_2$) or pure nitrogen ($N_2$) from the regeneration of the metal oxide with air according to equation (2).

Also further chemical looping technologies can be specified, for example, the chemical looping reforming (CLR) process for syngas generation from gaseous feedstock, or the chemical looping gasification (CLG) process for syngas generation from solid feedstock, wherein both CLR and CLG processes gain undiluted syngas preferably without nitrogen ($N_2$).

In reactor systems like fixed bed reactors that are currently used for chemical looping processes, powdered metal oxides are usually used as oxygen carriers. The multiple requirements for powdered chemically active metal oxide material in this case are, in particular, to achieve the highest possible oxygen exchange capacity with long-term stability, the lowest possible tendency to sintering and agglomeration, and the highest possible reactivity of the metal oxide powder provided - as independent as possible of the number of cycles already completed in the ongoing respective chemical

looping process.

A disadvantage, however, is that if such metal oxide powders are used for a longer period within a fixed bed reactor during operation of a chemical looping process, due to high temperature stress, high mechanical stress and cyclically changing reaction conditions of a sequence of reduction processes and oxidation processes, it has shown that these conditions lead to undesirable sintering, agglomeration of the metal oxide powder and repeated volume contraction and expansion through oxygen incorporation and depletion during the repeated redox cycles in the fixed bed reactor.

Currently, oxygen carriers are usually pelletized so that a fill made from them can be convected through in a fixed bed reactor. However, such pellets quickly break or disintegrate due to the aforementioned harsh operating conditions during use in a chemical looping process, which is why pelletizing such oxygen carriers has not proven successful as filling material for chemical looping processes in fixed bed reactors.

These undesirable effects of the metal oxide powder in the fixed bed reactor lead to significant volume changes and disintegration of the fixed bed filling material in form of pelletized metal oxide powder. This disadvantageously causes severe problems for said fixed-bed processes (depending on the specific material composition), such as:

(i) open wall gaps between the reactor wall and the compact core of the agglomerated and sintered fixed bed filling material or

(ii) a complete plugging from deagglomerated pelletized materials through the high mechanical load.

The agglomerated, sintered metal oxide thereby becomes so compact and dense that process gases can no longer flow through the compact fixed bed filling material due to the increased pressure loss within the agglomerated fixed bed filling material. Disadvantageously, the process gases flow either along the fixed bed reactor through the resulting open wall gap alongside the reactor wall, or there may be a complete blocking of the fixed bed reactor due to the compacted fixed bed filling material.

Due to either the high wall flow of the process gases within open wall gaps, that prevent process gases from flowing through the fixed bed filling material, or an excessively high pressure drop (depending on the oxygen carrier properties), the agglomerated and sintered metal oxide of the fixed bed filling material can no longer serve as an oxygen carrier for the reaction gas.

To avoid such unwanted effects, it has already been proposed to use chemically inert monolithic support structures for thermochemical high-temperature processes, which support structures have micropores to macropores with pore sizes in the range of 1 nm (nanometre) to 10 μm (micrometres), combined together with respective chemically active powders for fixed bed applications, thereby increasing the structural stability of the chemically active powders applied.

It has been shown that such inert support structures with pore sizes of 1 nm to 10 μm can reduce the wall effects in a fixed bed reactor and increase the overall structural stability of the fixed bed filling material. However, due to the small pore sizes up to 10 μm of such inert support structures, convective gas transport through the pores as well as an interaction of the chemically active particles with each other within the pores are not improved by such inert support structures, but rather impaired.

In contrast, usage of monolithic porous structures made of the chemically active material (oxygen carrier) with corresponding cavities can improve convective gas transport, but disadvantageously usage of such chemically active support structures does not solve the aforementioned structural problems that occur particularly in chemical looping processes due to the cyclic volume contractions of the chemically active material, which volume contractions are caused by the chemical reactions taking place cyclically.

In addition, usage of porous support structures that are coated with a coating layer of a chemically active catalyst has already become known from the prior art also for coating with redox active materials in such chemical looping processes.

However, this has turned out to be disadvantageous: Due to the difficult, harsh process conditions mentioned above during a chemical looping process, caused by high temperature stress, high mechanical stress and cyclically changing reaction conditions of a sequence of reduction and oxidation processes, such catalytic coating layers quickly detach from the underlying material of the support structure in consequence of the associated volume contraction of the chemically active material. Another major disadvantage of coated porous support structures for their use in fixed-bed chemical looping processes is the fact that via a comparably thin coating layer only a low volumetric loading with the chemically relevant active oxygen carrier material on the support structure can be achieved.

Subsequently, during usage in a chemical looping process and/or in a comparable chemical process for thermochemical energy storage, the quickly detached coating material is either discharged from the fixed bed reactor together with the process off-gas flow and is thus lost, or else the detached coating material blocks the pores of the support structure, which in turn worsens the convective gas transport through the porous material of the support structure.

US 2019/388874 A1 relates to an oxygen carrier solid in the form of particles for a process for chemical looping redox combustion of a hydrocarbon feedstock, with a redox active mass comprising a metal oxide or a mixture of metal

oxides dispersed in a ceramic matrix which contains at least one oxide with a melting point of more than 1500°C, such as alumina, and which initially has a specific macroporous texture.

OBJECT OF THE INVENTION

It is therefore an object of the invention to overcome the aforesaid disadvantages of the prior art and to provide a structured oxygen carrier product that can be applied for a chemical looping process, that shows long-term stability as well as has long lifetime during the use thereof in the process, and that has high convective gas permeability or low flow resistance in regard to convective gas flow, respectively, when being used in such a chemical looping process. Another object of the invention is to provide a method to prepare such a structured oxygen carrier product. Within the context of the present invention, it is also intended to provide a system comprising an oxygen carrier material as well as a porous support material, which system is required to prepare said structured oxygen carrier product according to the invention.

DESCRIPTION OF THE INVENTION

In order to achieve the object set out above, a structured oxygen carrier product is provided for use in a chemical looping process, said structured oxygen carrier product comprising:

- a porous support material, said porous support material having a specific inner surface area being structured with inner pore walls and intervening inner pore openings, wherein a proportion of at least 70 %, preferably at least 80 %, of said inner pore openings that have an equivalent spherical diameter between opposing pore walls in the range of 0.5 mm to 10 mm, forms an effective porosity of the porous support material;
- sintered oxygen carrier particles containing at least one redox active metal oxide, said sintered oxygen carrier particles are arranged within the inner pore openings of said porous support material, wherein a loading proportion of said sintered oxygen carrier particles being arranged within the inner pore openings of the porous support material is in the range of 50 vol.% to 95 vol.%, preferably in the range of 60 vol.% to 90 vol.%, of the effective porosity of the porous support material;
- gas-permeable gaps being arranged at least in sections between the inner pore walls and the sintered oxygen carrier particles that are arranged within the inner pore openings, wherein a gap degree of gas-permeable gaps within the inner pore openings of the porous support material is in the range of 5 vol.% to 50 vol.%, preferably in the range of 10 vol.% to 40 vol.%.

The term "equivalent spherical diameter" is generally used in science, wherein the equivalent spherical diameter of an irregularly shaped object is the diameter dv of a sphere of equivalent volume V:

$$dv = \sqrt[3]{\frac{6V}{\pi}}$$

According to the IUPAC definition, which is also applied hereafter, the term "equivalent spherical diameter" of a non-spherical particle is equal to a diameter of a spherical particle that exhibits identical properties, for example identical aerodynamic and/or hydrodynamic properties, to that of the investigated non-spherical particle.

The term "sintering" describes a process for the production or modification of materials. In this process, fine-grained ceramic or metallic materials are heated - often under increased pressure or specific gaseous atmospheres - but the temperatures remain below the melting temperature of the main components so that the shape (form) of the workpiece is retained. Shrinkage usually occurs in the process because the particles of the starting material become denser and pore spaces are filled. A basic distinction is made between solid phase sintering and liquid phase sintering, which also involves melting. Sintering processes are of great importance in the production of ceramics ("sintered glass ceramics") and in metallurgy ("sintered metals" and "powder metallurgy"). The temperature treatment of sintering transforms a fine- or coarse-grained green body, which was formed in a previous process step - for example, by means of extrusion - into a solid workpiece. The sintered product only acquires its final properties, such as hardness, strength or thermal conductivity, which are required in the respective application, through the temperature treatment.

In the following, the term "sintered oxygen carrier particles" refers to solid oxygen carrier particles containing at least one redox active metal oxide, that are used as starting material in powdered form for solid phase sintering or conditioning, respectively, of said particles under high temperatures and/or cyclically changing redox reaction conditions of an alternating sequence of reduction processes and oxidation processes. Under these conditions, the previously solid oxygen carrier powder of the starting material or precursor, respectively, becomes denser and the powder begins to agglomerate. During further pretreatment through redox reaction conditions, the sintered oxygen carrier particles evolve

from the agglomerated oxygen carrier powder which further densifies. The sintering and conditioning process is thus accompanied by a continuous volume reduction or shrinkage due to agglomeration of the powdered metals and thus sintered oxygen carrier particles are formed.

The term "sintered oxygen carrier particles", which refers to solid oxygen carrier particles, having a diameter significantly larger than the applied oxygen carrier powders during synthesis, containing at least one redox active metal oxide, and may further include, for example, specific additives to improve particle and chemical properties for their application in chemical looping processes.

The term "specific inner surface area" generally defines a property of solids as the total surface area of a certain material per unit of mass. The unit of a specific inner surface area may be given in $m^2/kg$ or as ratio of the total surface area of the respective material in regard to its solid or bulk volume, given in $m^2/m^3$.

The term "effective porosity" defines here a proportion of at least 70 %, preferably at least 80 %, of the total sum of interconnected pore space within the porous support material, wherein said proportion the inner pore openings have an equivalent spherical diameter between opposing pore walls in the range of 0.5 mm to 10 mm. Porosity that is not considered "effective porosity" may include bound water and isolated porosity not connected to other pores, and/or may include pores that have equivalent spherical diameter that are significantly smaller than the indicated range of 0.5 mm to 10 mm. Thus, the term "effective porosity" refers to the proportion of inner pores in the support material that has a sufficiently large equivalent spherical diameter of 0.5 mm to 10 mm to accommodate sintered oxygen carrier particles.

The term "at least one" used here and in the following comprises by definition both a single unit and/or object and several units and/or objects in the sense of two or more units and/or objects.

Advantageously usage of such a structured oxygen carrier product ensures optimal volume utilization and a very high loading density of the porous support material with sintered oxygen carrier particles that are arranged within the inner pores of the porous support material in a loss-proof manner. Due to a gap degree of gas-permeable gaps within the inner pore openings in the range of 5 vol.% to 50 vol.% (% by volume), a sufficient permeability for a convective gas flow through the structured oxygen carrier product is ensured.

The effective porosity as well as the gap degree of the gas-permeable gaps were determined in laboratory tests by the displacement volume of a suitable liquid through the inert support structure as well as the inert support structure including the sintered oxygen carrier, respectively, excluding the inner porosity of both components of the structured oxygen carrier product.

Thus, it is possible to use the structured oxygen carrier product of the invention in fixed bed reactors as filling material also in larger layer thicknesses without having to fear a high pressure loss of the reaction gas when flowing through such a filling material layer during operation.

Advantageously, due to the inner gas-permeable gaps between the inner pore walls of the porous support material and the sintered oxygen carrier particles, the at least one redox-active metal oxide provided remains readily available for the convectively flowing reaction gas, which is why the reaction conversion rate is high when using such a structured oxygen carrier product according to the invention especially for chemical looping reactions.

Through the inclusion of the redox active metal oxide particles within the inert support structure, furthermore the mechanical interaction between these metal oxide particles is minimized or even completely excluded. Therefore, the active metal oxide particles can freely expand and contract throughout their oxygen inclusion and depletion throughout the subsequent chemical looping process reduction and oxidation phase. Therefore, the inclusion of metal oxide particles within the inert support structure effectively minimizes the mechanical load through the inhibition of direct interaction between active metal oxide particles, which would occur in conventional pelletized bulk fillings.

As a further advantage of the inventive structured oxygen carrier product, it can be stated that due to the stable and controllable flow regime between the inner pore walls of the porous support material and the sintered oxygen carrier, the reaction conversion rate when using such a structured oxygen carrier product material for a chemical looping process in a fixed-bed reactor is higher compared to a conventional bulk filling material.

According to another preferred embodiment of the invention, a structured oxygen carrier product can comprise a porous support material having inner pore openings with an equivalent spherical diameter in the range of 1 mm to 5 mm.

Surprisingly, preliminary tests have shown that this selection of a porous support material having inner pore openings with an equivalent spherical diameter in the range of 1 to 5 mm offers the advantage that the reactivity increases due to the comparatively smaller particle diameter against larger equivalent spherical diameters. In addition, this selection of pore diameters of 1 mm to 5 mm further reduces the pressure loss during convective flow through such a fill, since the fine fraction of particles with an equivalent spherical particle diameter smaller than 1 mm is omitted with this selection.

In another preferred embodiment, it can be particularly advantageous if a structured oxygen carrier product according to the invention comprises a porous support material with inner pore openings having a sphericity of at least 0.70, preferably a sphericity of at least 0.75, as spherical objects exhibit a higher mechanical strength over longer-stretched, needle-shaped objects.

The term "sphericity" is generally used to define a measure of how closely the shape of an object resembles that of a perfect sphere. The sphericity $\psi$ according to Wadell is defined as the ratio of the surface area $A_S$ of a sphere with the

same volume V as the given particle or the given pore of a porous material to the surface area $A_0$ of the particle or the respective pore:

$$\psi = \frac{\sqrt[3]{36\pi V^2}}{A_0}$$

The sphericity of a sphere is $\psi = 1$. For example a dodecahedron has a sphericity of approximately $\psi = 0.91$, and an icosahedron has a sphericity of approximately $\psi = 0.94$. Also cuboid structures for example with an aspect ratio of 1:3 are covered by the aforesaid range of sphericity of 0.70 to 1, preferably of 0.75 to 1.

However, controlled deviations from the ideal spherical shape can be used to optimize the flow field and thus minimize the pressure drop within the structured oxygen carrier product.

In the context of the optimization of the flow field and minimization of the pressure drop, it can be conceivable to provide an optimized porous support material, which porous support material has been produced using geometry-optimized inert support structures that are made by way of example via an additive manufacturing process, for example using a 3D printing process.

Under the term "aspect ratio" in general the ratio of the smallest expansion to the largest expansion of an object is to be understood. Here and in the following, the aspect ratio refers in particular to the shape and structure of the inner pore openings of the porous support material. In other words, the aforesaid minimum values of a sphericity of at least 0.70, preferably a sphericity of at least 0.75, in regard of a porous support material with inner pore openings, correspond to an aspect ratio of at least 1:5, preferably to an aspect ratio of at least 1:3, of said inner pore openings of the porous support material.

In any case, usage of such a structured oxygen carrier product ensures optimal volume utilization and the highest possible loading density of the porous support material with oxygen carrier particles.

In a further preferred embodiment of the invention, the structured oxygen carrier product can comprise a porous support material having inner pore openings that are uncoated.

As mentioned above, porous support materials that are coated with a coating layer of a chemically active catalyst are already known from the prior art.

In order to avoid the aforesaid disadvantages of a coated support material when used in a chemical looping process, especially the low volumetric loading of coatings with redox-active material and thus the significantly lower exchange capacity for oxygen exchange with the active material, it is typically targeted to maximize the oxygen exchange capacity within a given fixed-bed reactor volume.

Furthermore, to avoid quick detaching of such catalytic coating layers from the underlying material of the support structure in consequence of the associated volume contraction of the chemically active material, the invention takes a different approach, namely to avoid coating layers and to use uncoated support material as part of the ready-to-use structured oxygen carrier product, which is filled with sintered oxygen carrier particles. Due to the high loading, the sintered oxygen carrier particles are encapsulated within the continuous inert support structure and thus cannot be pneumatically conveyed out of the inert support structure and thus out of the fixed-bed reactor system, which would otherwise lead to a permanent loss of active oxygen carrier particles.

As chemical looping and thermochemical energy storage processes are typically operated at elevated temperatures, depending on the application, at least at temperatures above 100°C, it further can be particularly useful if a structured oxygen carrier product according to the invention comprises porous support material that is structurally inert, is temperature resistant having a melting point above 1000°C, preferably having a melting point above 1300°C as for withstanding the strongly exothermic oxidation reactions, and is selected from the group comprising, preferably consisting of: ceramic material, ceramic-based material, ceramic foam, metallic material, metal-based material, metallic foam, metal-ceramic composite.

In the following, the term "structurally inert" means that the porous support material itself retains its mechanical structure and is not providing significant own lattice oxygen for the gas-solid reaction in chemical looping processes.

The term "ceramic-based material" comprises for example: Refractory ceramics containing zirconium oxide $ZrO_2$, aluminium oxide $Al_2O_3$, silicon dioxide $SiO_2$, zirconium (partially) stabilised with yttrium oxide $Y_2O_3$ (YSZ for short) which provide no own lattice oxygen or specific materials as perovskites ($ABO_{3-\delta}$) which maintain their crystal and thus mechanical structure and provide only a low partial amount of lattice oxygen. The absolute amount of exchanged oxygen is considerably lower, for example less than 10%, compared to that of the sintered oxygen carrier particles. By way of definition, "metal-based materials" comprise for example metal alloys and/or refractory metals.

Surprisingly, as preliminary experiments showed, several of these aforesaid materials like, for example, yttrium oxide $Y_2O_3$ (partially) stabilised zirconium oxide (YSZ), have very good oxygen-conducting properties, which is why these structure-inert materials do not provide their own lattice oxygen for the gas-phase reaction, but are nevertheless advantageous for usage in chemical looping processes and the respective redox reactions that take place in these

processes.

In even another advantageous embodiment of the invention, the structured oxygen carrier product can comprise sintered oxygen carrier particles that are suitable to be reduced and oxidized in elevated temperature atmospheres in the range of 100°C to 1350°C for chemical looping and thermochemical energy storage processes, preferably in the range of higher temperatures of 400°C to 1300°C.

The sintered oxygen carrier product can also be suitable for use in chemical looping processes at comparatively low temperatures, for example at temperatures below 400°C where phase changes, oxygen inclusion as well as oxygen depletion and temperature gradients of the oxygen carrier during the repeated reduction and oxidation phases causes swelling or shrinking and thus negatively affect the mechanical integrity of state-of-the-art pelletized oxygen carriers.

At comparatively high temperatures, for example above 400°C, in addition to the abovementioned effects (phase changes, oxygen inclusion/depletion and temperature gradients), sintering sets in and furthermore promotes the mechanical decomposition of the active oxygen carrier. This makes the invention particularly flexible for both low-temperature (below 400°C) and high-temperature (above 400°C) chemical looping processes and thermochemical energy storage systems.

It may also be beneficial if in a structured oxygen carrier product according to the invention, the at least one redox active metal oxide contained in the sintered oxygen carrier particles is selected from the group comprising, preferably consisting of: Fe, Ni, Cu, W, Ca, Mn, Co, Mo, Ce, and their oxides, and/or mixtures thereof.

Advantageously these metals and/or their metal oxides and/or mixtures thereof are known to be chemically active materials that exhibit good reduction and oxidation thermodynamics and kinetics both in a chemical looping and thermochemical energy storage process in high temperature atmospheres.

In another preferred embodiment of the invention, the structured oxygen carrier product can comprise sintered oxygen carrier particles that contain at least one dopant mean that is selected from the group comprising, preferably consisting of: Na, K, Mg, Ca, Sr, Ba, Y, La, Ti, Zr, V, Cr, Mo, Al, Si, Fe, Ni, Ce, and their oxides, and/or mixtures thereof.

Dopants and mixtures of these elements with the respective redox active metal oxide included in the active oxygen carrier phase or forming separate active phases, can positively affect the reaction rates in oxidation and reduction phase, the thermochemical equilibrium and/or the chemical and mechanical stability of the chemically active materials.

According to another advantageous embodiment of the invention, the structured oxygen carrier product can comprise sintered oxygen carrier particles that further contain at least one material that is essentially structurally inert, wherein preferably the at least one material is selected from the group comprising or consisting of: Na, K, Mg, Ca, Sr, Ba, Y, La, Ti, Zr, V, Cr, Mo, Al, Si, Fe, Ni, Ce, and their oxides and/or mixtures thereof.

Chemically inert forms of these elements, for example their oxides, or their inert forms of mixtures with the redox active metal oxides, which do not participate in the redox reaction, can positively affect the reaction rates in oxidation and reduction phase, the thermochemical equilibrium and/or the chemical and mechanical stability of said redox active metal oxide, as they inhibit excessive sintering, lower thermal gradients, preserve the inner porosity of the particles and thus overall control and preserve the reactivity and particle properties over extended usage periods.

The tasks of the invention mentioned at the beginning are also solved with a method to prepare a structured oxygen carrier product according to the invention, said method comprising the following steps:

- providing a porous support material, said porous support material having a specific inner surface area being structured with inner pore walls and intervening inner pore openings, wherein a proportion of at least 70 %, preferably at least 80 %, of said inner pore openings that have an equivalent spherical diameter between opposing pore walls in the range of 0.5 mm to 10 mm, forms an effective porosity of the porous support material;
- providing a solid oxygen carrier powder containing at least one redox active metal oxide, said oxygen carrier powder having an equivalent mean particle diameter that is smaller than 100 $\mu$m (micrometres), preferably is in the range of 0.1 $\mu$m to 50 $\mu$m (micrometres);
- providing a suspending agent;
- preparing a suspension containing said oxygen carrier powder being suspended in said suspending agent, wherein the proportion of the oxygen carrier powder in the suspension is in the range of 60 wt.% to 95 wt.%, preferably in the range of 65 wt.% to 90 wt.%, and wherein the proportion of the suspending agent in the suspension is in the range of 5 wt.% to 40 wt.%, preferably is in the range of 10 wt.% to 35 wt.%;
- inserting said suspension containing said oxygen carrier powder and suspending agent into the inner pore openings of the porous support material;
- evaporating the suspending agent from the inner pore openings at an elevated temperature, which temperature is selected above the evaporation temperature of the suspending agent, to receive an agglomerated oxygen carrier powder;
- sintering of the agglomerated oxygen carrier powder within the inner pore openings at an elevated sintering temperature and/or at a number of cycles of a sequence of cyclically alternating reduction processes and oxidation processes, until sintered oxygen carrier particles are obtained, wherein a loading proportion of said sintered oxygen

carrier particles being arranged within the inner pore openings of the porous support material is in the range of 50 vol.% to 95 vol.%, preferably in the range of 60 vol.% to 90 vol.%, of the effective porosity of the porous support material;
- obtaining a structured oxygen carrier product having gas-permeable gaps being arranged at least in sections between the inner pore walls and the sintered oxygen carrier particles that were formed within the inner pore openings, wherein a gap degree of gas-permeable gaps within the inner pore openings of the porous support material is in the range of 5 vol.% to 50 vol.%, preferably in the range of 10 vol.% to 40 vol.%.

Briefly summarised according to the inventive preparation method, the filling of the sintered oxygen carrier particles into the inner pore openings of the porous support material is made possible via a sequence of the following aforementioned steps (without mentioning here all detailed process features again):

- preparing a suspension containing an oxygen carrier powder containing at least one redox active metal oxide, wherein said oxygen carrier powder being suspended in a suspending agent;
- inserting said suspension containing said oxygen carrier powder and suspending agent into the inner pore openings of the porous support material;
- evaporating the suspending agent from the inner pore openings at an elevated temperature, which temperature is selected above the evaporation temperature of the suspending agent, to receive a structured oxygen carrier intermediate with an agglomerated oxygen carrier powder;
- sintering of the agglomerated oxygen carrier powder within the inner pore openings at an elevated sintering temperature and/or at a number of cycles of a sequence of cyclically alternating reduction processes and oxidation processes, until sintered oxygen carrier particles are obtained.

Via a sequence of these manufacturing steps is made possible to receive a high loading proportion of said sintered oxygen carrier particles being arranged within the inner pore openings of the porous support material in the range of 50 vol.% to 95 vol.%, preferably in the range of 60 vol.% to 90 vol.%, of the effective porosity of the porous support material. Advantageously, the sintered oxygen carrier particles are trapped in the respective pores due to the high loading proportion and, thus, cannot be discharged from the pores of the porous support material during operation of a chemical looping process, even at high gas velocities in the fixed bed reactor.

As suspending agent, water can be used for example.

Thus, the provided suspension contains at least one oxygen carrier powder being suspended in a suspending agent, wherein the proportion of the oxygen carrier powder in the suspension is in the range of 60 wt.% to 95 wt.%, preferably in the range of 65 wt.% to 90 wt.%, and wherein the proportion of the suspending agent in the suspension is in the range of 5 wt.% to 40 wt.%, preferably in the range of 10 wt.% to 35 wt.%. The at least one solid oxygen carrier powder provided contains at least one redox active metal oxide, wherein said oxygen carrier powder having an equivalent mean particle diameter that is smaller than 100 $\mu$m (micrometres), preferably is in the range of 0.1 $\mu$m to 50 $\mu$m (micrometres). The at least one redox active metal oxide can be selected from the group comprising, preferably consisting of: Fe, Ni, Cu, W, Ca, Mn, Co, Mo, Ce, and their oxides, and/or mixtures thereof. The prepared suspension may also contain further ingredients such as at least one dopant means and/or at least one additive agent. These further ingredients can be, for example, substances to optimise the oxygen carrier properties and/or to improve the rheological properties of the suspension.

To sum up, the suspension may be a multi-component mixture containing, if necessary, a mixed solid oxygen carrier powder containing one or several redox active metal oxides, and further containing a suspending agent like water, possibly together with further optional ingredients like one or several dopant means and/or one or several additive agents.

The term "agglomerated oxygen carrier powder" refers to an intermediate product that is formed after the evaporation of the suspending agent. This intermediate product or structured oxygen carrier intermediate, respectively, does not yet have the above-mentioned properties of the finished end product or structured oxygen carrier product, respectively. Only after sintering or conditioning, respectively, under elevated temperatures and/or conditioning within the first redox cycles of a chemical looping process, do the claimed properties of the finished structured oxygen carrier product arise.

The advantages of the preparation method according to the invention correspond - unless explicitly mentioned - mutatis mutandis to the aforesaid advantages and effects already mentioned in connection with the structured oxygen carrier product. For reasons of clarity, reference is therefore made here to the essentially identical, aforementioned advantages and effects in connection with the structured oxygen carrier product.

In a preferred embodiment of the preparation method according to the invention, the porous support material can be a structurally inert, temperature resistant material having a melting point above 1000°C, preferably having a melting point above 1300°C, and can be further selected from the group comprising, preferably consisting of: ceramic material, ceramic-based material, ceramic foam, metallic material, metal-based material, metallic foam, metal-ceramic composite.

In the context of the invention, it is conceivable to provide a suitable porous support material, which support

material has been produced using an additive manufacturing process, for example using a 3D printing process.

In general, the structure of the porous support material is intended to spatially and mechanically decouple the sintered oxygen carrier particles located in the cavities from each other in order to minimize the mechanical load on the sintered oxygen carriers on the one hand, and to ensure the best possible convective flow around the sintered oxygen carrier particles without bypass flows during operation of a chemical looping process on the other.

In particular, the properties of the porous support material that are advantageous both for the preparation method according to the invention as well as for the structured oxygen carrier product according to the invention, for example specific pore sizes in the range of 0.5 mm to 10 mm with preferably spherical pore properties, for example with a sphericity in the range of 0.7 to 1, and/or with an aspect ratio of said pores in the range of 1:1 to 1:5, can be advantageously "designed" by means of additive manufacturing processes that are known per se. For this purpose appropriate computer-aided calculation methods can be used to arrange and shape structures of pores within the porous support material in such a way, that a porous support material produced using an additive manufacturing process can have the best possible properties for the subsequent use of the structured oxygen carrier product in a chemical looping process.

For example, preferably by means of such computer-aided calculation methods applied for additive manufacturing of the porous support material, the effective porosity of said porous support material can be optimised to further increase the loading proportion of said sintered oxygen carrier particles being arranged within the inner pore openings of the porous support material.

In addition or in combination to this, also the convective permeability of the porous support material produced by an additive manufacturing process can be optimised to reduce the pressure drop when flowing through a filling material of a fixed bed reactor containing such porous support material during a chemical looping process.

To provide a preparation method for a structured oxygen carrier product that can be used in a particularly flexible way, it can be advantageous when for the step of sintering the agglomerated oxygen carrier powder within the inner pore openings an elevated sintering temperature of 400°C to 1300°C and/or a number of one to ten cycles of cyclically alternating reduction and oxidation processes is/are selected.

Preliminary tests showed that a number of one to ten initial cycles of alternating reduction and oxidation processes of the respective chemical looping process is or are usually sufficient for conditioning the structured oxygen carrier product. Suitable conditioning of the structured oxygen carrier product can also be done at elevated temperatures in the range of 400°C to 1300°C. Optionally, combinations of the aforementioned conditioning parameters, namely conditioning of the structured oxygen carrier product during one or more redox cycles at correspondingly elevated temperatures, can also be useful to receive a robust, durable structured oxygen carrier product that can be further applied under the harsh operating conditions during use in a chemical looping process.

According to another preferred embodiment of the inventive preparation method, the prepared suspension can further contain at least one additive agent to improve the rheological properties of the suspension, wherein the proportion of the at least one additive agent in the suspension is preferably in the range of 0.1 wt.% to 5 wt.%.

Additive agents to improve rheological properties of the suspension, such as its viscosity and/or surface tension, may for example be or contain ionic molecules, macromolecules like polyethylene glycol, polyacrylates, polyvinyl acetates, cellulose derivatives and/or block co-polymers thereof, or may contain ionic low molecular weight compounds like monosaccharides and their derivatives, or citric acid and/or its esters. By adding such suitable additive agents, which can also be referred to as "liquefiers", the flow properties of even hydrophobic particles can be improved, which would otherwise segregate and settle in water as a suspending agent. This may facilitate the filling of the provided porous support material with the suspension without the need for mechanical aids for filling. In addition, by means of proper additive agents applied, the tendency for sedimentation of the suspended particles in the suspension can be reduced.

Advantageously, the prepared suspension may further contain at least one dopant means and/or at least one material that is essentially structured inert, wherein the at least one dopant means and/or at least one inertly structured material is selected from the group comprising, preferably consisting of: Na, K, Mg, Ca, Sr, Ba, Y, La, Ti, Zr, V, Cr, Mo, Al, Si, Fe, Ni, Ce, and their oxides, and/or mixtures thereof.

A system to prepare a structured oxygen carrier intermediate as starting material that has to be sintered subsequently for obtaining a structured oxygen carrier product according to the invention that can be used in a chemical looping process, said system comprising:

- a porous support material, said porous support material having a specific inner surface area being structured with inner pore walls and intervening inner pore openings, wherein a proportion of at least 70 %, preferably at least 80 %, of said inner pore openings have an equivalent spherical diameter between opposing pore walls in the range of 0.5 mm to 10 mm, wherein said proportion of inner pore openings forms an effective porosity of the porous support material;
- a solid oxygen carrier powder containing at least one redox active metal oxide, said oxygen carrier powder having an equivalent mean particle diameter that is smaller than 100 μm (micrometres), preferably is in the range of 0.1 μm to 50 μm (micrometres);
- a suspending agent suitable to prepare a suspension containing said oxygen carrier powder.

As said before, a suitable suspending agent may be water. The solid oxygen carrier powder may also be a mix of two or more solid oxygen carrier powders containing several redox active metal oxides.

As already explained in detail earlier, a structured oxygen carrier intermediate having an agglomerated oxygen carrier powder that can be received as intermediate product by this preparation system after evaporation of the suspending agent, does not yet have the properties of a structured oxygen carrier product listed above.

BRIEF DESCRIPTION OF THE DRAWINGS

The invention will now be explained in more detail below with reference to exemplary embodiments of the invention. The schematic drawings are provided by way of example and are intended to explain the concept of the invention, but shall in no way restrict it or even render it conclusively, wherein:

Fig. 1 shows in schematic process flow scheme a first embodiment of a dual-reactor configuration for a chemical looping redox process mentioned by way of example;

Fig. 2 shows in schematic process flow scheme a second embodiment of a single reactor configuration for a chemical looping redox process mentioned by way of example;

Fig. 3 shows in a photograph, according to the prior art, pelletized and sintered metal oxide particles after usage in a fixed bed reactor of a chemical looping redox system, which particles are disintegrated and agglomerated to a non-permeable, solid core material;

Fig. 4A shows in a schematic side view a metal powder according to the prior art after filing in a fixed bed reactor;

Fig. 4B shows in a schematic side view the metal powder as depicted in Fig. 4A according to the prior art after usage within a fixed bed reactor that has agglomerated and shrunk causing a bypass wall flow;

Fig. 4C shows in a schematic side view the metal powder as depicted in Fig. 4A according to the prior art after usage within a fixed bed reactor that has agglomerated and formed a dense core which plugs the reactor and causes an excessively high pressure drop;

Fig. 5 shows in a photograph a porous support material according to the invention having a macroscopic support structure with a specific inner surface area;

Fig. 6 shows in a photograph according to a method step of the inventive preparation method how to manufacture a structured oxygen carrier product, wherein a suspension containing oxygen carrier powder is inserted into a porous support material before evaporation of a suspending agent;

Fig. 7 shows in a photograph - comparable to Fig. 6 - another method step of the inventive preparation method how to manufacture a structured oxygen carrier product, wherein the suspending agent of the suspension containing oxygen carrier powder has been evaporated;

Fig. 8 shows in a combined schematic cross-sectional view the shrinkage of the agglomerated oxygen carrier powder to the sintered oxygen carrier pellets of the final structured oxygen carrier product according to the inventive method, during and after final sintering or conditioning, respectively;

Fig. 9 shows in a schematic cross-sectional a detail of a structured oxygen carrier intermediate after the suspending agent of the suspension containing oxygen carrier powder has been evaporated according to the invention;

Fig. 10 shows in a schematic cross-sectional a detail of a structured oxygen carrier product according to the invention;

Fig. 11 shows as a diagram the course of the relative conversion of a redox-active oxygen carrier material, each given in % of the theoretically expected value for the active material, as a function of the number of cycles of a chemical looping process, wherein data sets B,C each refer to a structured oxygen carrier product according to the invention, and wherein data set A, in comparison, refers to the same redox-active oxygen carrier material, which, however, was used according to the prior art without structural stabilisation within a porous support material;

Fig. 12 shows in a photograph a top view of a structured oxygen carrier product according to the invention after use in a chemical looping process;

Fig. 13 shows in a photograph an isometric side view of the structured oxygen carrier product as shown in Fig. 12.

WAYS OF CARRYING OUT THE INVENTION

Fig. 1 shows in a schematic process flow scheme a first embodiment of a dual-reactor configuration for a chemical looping redox process mentioned by way of example.

A first reactor R1 and a second reactor R2 of a moving- or fluidized bed operation is shown. As input stream of the first reactor R1, a feedstock stream FS or fuel, respectively, is provided, wherein the feedstock stream FS comprises, for example, a mixture of synthesis gas, hydrogen $H_2$ and carbon monoxide CO. The feedstock FS provided is reduced via a

reduction reaction RED within the first reactor R1. As output stream of the first reactor R1, a lean gas stream LG comprising for example carbon dioxide $CO_2$ and water $H_2O$ is obtained. The second reactor R2 is fed with an input stream of an oxidation medium OM like, for example, air. Within the second reactor R2 an oxidation reaction OXID takes place. As output stream of the second reactor R2, a depleted oxidation medium DOM like, for example, air, is obtained.

Within the respective reactors R1, R2 of the dual-reactor system, a suitable metal oxide $Me_xO_y$ as oxygen carrier is applied as oxygen-carrying intermediate, which metal oxide $Me_xO_y$ is periodically reduced $Me_xO_{y-z}$ by the feedstock FS or fuel, respectively, during combustion in the presence of a feedstock material FS containing hydrogen $H_2$ and/or carbon monoxide CO, and which reduced metal oxide $Me_xO_{y-2}$ is alternatingly regenerated $Me_xO_y$ in an oxidative medium in the presence of oxygen $O_2$.

The purpose of this chemical looping technology may vary with the desired product. The aforesaid chemical looping combustion (CLC) process was proposed as technology to gain the heat of combustion while the gaseous fuel stream can be separated from the combustion air. Thus, via this CLC process the reductive and oxidative media can be separated to preferably obtain the pure lean product gas stream LG containing carbon dioxide $CO_2$ and steam $H_20$ from feedstock FS or fuel oxidation, and depleted oxidation medium DOM like air $O_2$ or pure nitrogen $N_2$ from the regeneration of the metal oxide with air.

Fig. 2 shows in schematic process flow scheme a second embodiment of a single reactor configuration of a fixed bed reactor FBR for a chemical looping redox process mentioned by way of example. In this fixed bed reactor FBR, a temporal shift of the gaseous media takes place. A reduction phase RED and oxidation phase OXID both take place within the same fixed bed reactor FBR.

Fig. 3 shows in a photograph, according to the prior art, pelletized and sintered oxygen carriers OC in form of metal oxide particles after usage in a fixed bed reactor of a chemical looping redox system. As can be seen, the oxygen carrier OC particles are disintegrated and subsequently densely agglomerated to a non-permeable, solid core material. A porous support material to spatially and mechanically decouple the oxygen carrier OC particles is not applied.

As can also be seen in Fig. 3, the pelletised metal oxide particles are not abrasion-resistant, but the pellets are encased and covered by their own metal powder, which is why the convective flowability of a reaction gas through a reactor filling made of such pelletised metal oxide particles is disadvantageously extremely low.

Fig. 4A to Fig. 4C each show in a schematic side view according to the prior art oxygen carrier OC particles in form of a metal powder that are provided as filling material within a fixed bed reactor FBR.

Fig. 4A shows the oxygen carrier OC particles in form of a metal powder after filing in a fixed bed reactor FBR. Arrows GF symbolize convective gas flow GF while the fixed bed reactor FBR is used to perform a gas phase/solid phase reaction.

Fig. 4B shows the oxygen carrier OC particles in form of a metal powder as depicted in Fig. 4A after usage within the fixed bed reactor FBR: The oxygen carrier OC particles have agglomerated and are shrunk due to harsh reaction conditions causing an unwanted bypass wall gas flow GF within a wall gap having a wall gap distance D between the inner walls of the fixed bed reactor FBR and the agglomerated, shrunken bulk of oxygen carrier OC particles. The convective flow through the agglomerated bulk of oxygen carrier OC particles is limited and is therefore low. The convective gas phase flow takes place here practically exclusively within the wall gap D. Due to the fact that the oxygen carrier OC hardly participate in the redox reaction, the reaction conversion is therefore low.

Fig. 4C shows the oxygen carrier OC particles in form of a metal powder as depicted in Fig. 4A after usage within the fixed bed reactor FBR, wherein the oxygen carrier OC particles have agglomerated and formed a dense bulk or core which plugs the entire cross section of the fixed bed reactor FBR and causes an excessively high pressure drop of the convective gas flow GF, symbolized again with arrows GF. In contrast to Fig. 4B, there is no wall gap in this case according to Fig. 4C through which the gas flow could flow past the OC particles without coming into contact with them. However, in the prior art arrangement shown in Fig. 4C, the free cross-section of the FBR is blocked by the agglomerated OC particles. Also in this case as depicted in Fig. 4C, a favourable convective flow of the reaction gas through the agglomerated bulk of the OC particles is not possible, so that the oxygen carrier OC can hardly participate in the redox reaction, and thus the reaction conversion is low here, too.

Fig. 5 shows in a photograph a porous support material 10 according to the invention having a macroscopic support structure with a specific inner surface area. For example here a foam made of zirconium oxide $ZrO_2$ is used as porous support material 10 having a specific inner surface area with inner pore walls 11 and intervening inner pore openings 12. For example at least 80 % of the inner pore openings 12 of this foam have an equivalent spherical diameter 13 in the range of 0.5 mm to 10 mm and a sphericity of at least 0.70. This proportion - here of at least 80 % - of inner pore openings 12 that have equivalent spherical diameters 13 of the indicated range of 0.5 mm to 10 mm corresponds to an effective porosity 15 of the porous support material 10 that is sufficiently large to accommodate sintered oxygen carrier particles later on.

Fig. 6 shows in a photograph according to a method step of the inventive preparation method how to manufacture a structured oxygen carrier product. In Fig. 6 a suspension 25 containing oxygen carrier powder 20, wherein said suspension 25 is inserted into a porous support material 10 before evaporation of a suspending agent 26.

As porous support material 10 for example a foam made of zirconium oxide $ZrO_2$ is used, as is shown in Fig. 5. The suspension 25 provided here comprises for example 70 wt.% of a mixture of solid oxygen carrier powder 20, wherein the mixture itself contains a proportion of 80 wt.% of iron(III) oxide $Fe_2O_3$ and a proportion of 20 wt.% of aluminium oxide $Al_2O_3$. The mixture of solid oxygen carrier powder 20 having an equivalent mean particle diameter 21 that is here smaller than 50 μm (micrometer).

The suspension 25 further comprises for example 28 wt.% of water as suspending agent 26. In addition, the suspension 25 also contains a minor proportion of approximately 2 wt.% of additive agents 27 to improve the rheological properties of the suspension, especially to enhance the wettability and dispersibility of the suspension 25.

Fig. 7 shows in a photograph - starting from the arrangement shown in Fig. 6 - another, subsequent method step of the inventive preparation method how to manufacture a structured oxygen carrier product, wherein the suspending agent 26 of the suspension 25 containing oxygen carrier powder 20 has been evaporated.

Thus, Fig. 7 shows a structured oxygen carrier intermediate 30 with a porous support material 10 and an agglomerated oxygen carrier powder 28 arranged within the pore openings 12 of said porous support material 10. To obtain the agglomerated oxygen carrier powder 28, the suspending agent 26, here for example water, has been evaporated earlier from the inner pore openings 12 at an elevated evaporation temperature for example of 150°C.

This structured oxygen carrier intermediate 30 thus consists of the structured porous support material 10 and the dried solid suspension, which, however, is still without defined cavities between the structure of the support material 10 and the agglomerated oxygen carrier powder 28. This intermediate 30 can therefore only be flowed through poorly for the time being.

Only after subsequent conditioning and/or sintering, sintered oxygen carrier particles are formed within the pore openings of the porous support material 10, which can be easily flowed around or through by a process gas.

Fig. 8 shows in a combined schematic cross-sectional detailed view of the preparation of the final structured oxygen carrier product 50 according to the inventive method, where inner pore openings 12 of a porous support material 10 are filled with already agglomerated oxygen carrier particles 28, after the suspending agent has been evaporated and during conditioning or sintering. The progressive shrinkage of the agglomerated oxygen carrier powder 28 to the final sintered oxygen carrier particles is shown schematically during the ongoing conditioning process. Fig. 8 corresponds to a detail A marked with dotted lines A according to Figures 5 to 7.

In Fig. 8 a porous support material 10, for example a ceramic support structure as shown in Fig. 5, is used. Inner pore openings 12 between inner pore walls 11 having an equivalent spherical diameter 13 were filled with already partially sintered or conditioned agglomerated oxygen carrier powder 28 to obtain a structured oxygen carrier intermediate 30. After complete conditioning or sintering the agglomerated oxygen carrier powder 28 within the inner pore openings 12 at an elevated sintering temperature in the range of 400°C to 1300°C and conditioning the agglomerated oxygen carrier powder 28 while several cycles, for example five cycles, of cyclically alternating redox processes, a structured oxygen carrier product 50 is obtained. This structured oxygen carrier product 50 having sintered oxygen carrier particles 40 that are formed within the inner pore openings 12 in a loss-proof manner. The sintered oxygen carrier particles 40 have equivalent diameters 41 and are shrunk compared to the agglomerated oxygen carrier powder 28 before sintering and conditioning, as can be seen in Fig. 9. Between the inner pore walls 11 and the sintered oxygen carrier particles 40, gas-permeable gaps 42 are formed within the inner pore openings 12 of the porous support material 10. A gap degree of said gas-permeable gaps 42 within the inner pore openings 12 of the porous support material 10 is here for example approximately 25 vol.% (% by volume).

Thus, the convective gas flow GF of a process gas through such a structured oxygen carrier product 50 material is very high with low pressure loss, and the oxygen carrier powder 20 bound in the sintered oxygen carrier 40 is made available to the passing process gas with the largest possible surface while maintaining a low pressure drop. The reaction conversion rate when using such a structured oxygen carrier product material 50 according to the invention for a chemical looping process in a fixed-bed reactor is therefore higher compared to a conventional bulk filling material, as due to the stable and controllable flow regime between the inner pore walls 11 of the porous support material 10 and the sintered oxygen carrier 40.

Alternatively the porous support material 10 schematically shown in Fig. 8 can also be manufactured by an additive manufacturing process like, for example, via a 3D printing process to enhance the flow field and to minimize the pressure drop.

Fig. 9 shows in a schematic cross-sectional a detail of a structured oxygen carrier intermediate 30 according to the invention - before sintering or conditioning of the agglomerated oxygen carrier powder 28 within the inner pore openings 12 of the porous support material 10.

Fig. 10 shows in a schematic cross-sectional a detail of a structured oxygen carrier product 50 according to the invention after sintering or conditioning, respectively. Via the preparation method according to the invention, a structured oxygen carrier product 50 is obtained having gas-permeable gaps 42 being arranged at least in sections between the inner pore walls 11 of the porous support material 10 and the sintered oxygen carrier particles 40 that are formed within the inner pore openings 12. A gap degree of gas-permeable gaps 42 within the inner pore openings 12 of the porous support

material 10 is obtained here for example in the range of 15 vol.% to 20 vol.%. Thus, the gas permeability for process gas flowing through such a structured oxygen carrier product 50 is increased and the convective gas flow GF is enhanced. The loading proportion of said sintered oxygen carrier particles 40 that are formed within the inner pore openings 12 of the porous support material 10 is here in the range of 80 to 90 vol.% of the effective porosity 15 of said porous support material 10.

Fig. 11 shows in a diagram the course of the relative conversion of a redox-active oxygen carrier material, wherein each data set given in % of the theoretically expected value for the active material, as a function of the number of cycles of a chemical looping process. Data sets B,C each refer to a structured oxygen carrier product 50 according to the invention, wherein data set A, in comparison, refers to the same redox-active oxygen carrier material, which, however, was used as a bulk filling material of sintered oxygen carrier particles according to the prior art without structural stabilisation within a porous support material.

For data set A, values A indicated in Fig. 11 as crosses, 500 g of a mixture of 80 wt.% of iron(III) oxide $Fe_2O_3$ and 20 wt.% of aluminium oxide $Al_2O_3$, both metal oxides provided as metal oxide powder, were pelletised to an equivalent spherical diameter in the range of 1 mm to 5 mm, and used as filling material for a chemical looping process in a fixed bed reactor under laboratory test conditions. Due to the absence of a porous support material according to a conventional operation method, the relative conversion rate for data set A quickly deteriorates after 50 cycles of the ongoing chemical looping process and drops to conversion rates below 60% after approximately 70 cycles.

In contrast, for data sets B and C that each refer to a structured oxygen carrier product 50 according to the invention, the conversion rates were obtained for the same redox-active oxygen carrier material under the same process conditions of the chemical looping process like applied for data set A. It can be seen that the relative conversion rates for data sets B and C each stay constantly high even after 200 cycles of the ongoing chemical looping process applied.

For data set B, values B marked in Fig. 11 as black dots, a structured oxygen carrier product 50 was used with a porous support material 10 made of zirconium oxide $ZrO_2$ foam stabilized with calcium oxide (3 wt.% CaO). The loading of the porous support material 10 with a mixture of 80 wt.% of iron(III) oxide $Fe_2O_3$ and 20 wt.% of aluminium oxide $Al_2O_3$, both initially provided as metal oxide powder, was made according to the inventive preparation method. As suspending agent water was used. For the laboratory test conditions according to data set B, 314 g of a structured oxygen carrier product 50 was used as filling material for the fixed bed reactor under laboratory test conditions, wherein the proportion of the sintered oxygen carrier particles containing a mixture of 80 wt.% of iron(III) oxide $Fe_2O_3$ and 20 wt.% of aluminium oxide $Al_2O_3$, was 50 wt.% or 157 g of the total structured oxygen carrier product 50. Thus, the proportion of the zirconium oxide $ZrO_2$ foam as porous support material 10 was also 50 wt.% or 157 g of the total structured oxygen carrier product 50 applied. As can be seen, the conversion rate for this set up according to data set B was constantly high at conversion rates of 75 % and above even after 200 cycles of the chemical looping process applied.

For data set C, values C marked in Fig. 11 as grey dots, the same materials were applied as for the set up according to data set B. Again, a structured oxygen carrier product 50 was used with a porous support material 10 made of zirconium oxide $ZrO_2$ foam stabilized with calcium oxide (3 wt.% CaO). The loading of the porous support material 10 was made according to the inventive preparation method using a mixture of 80 wt.% of iron(III) oxide $Fe_2O_3$ and 20 wt.% of aluminium oxide $Al_2O_3$. Both metal oxides were initially provided as metal powder. For the laboratory test conditions according to data set C, 317 g of a structured oxygen carrier product 50 was used as filling material for the fixed bed reactor under laboratory test conditions, wherein the proportion of the sintered oxygen carrier particles (containing a mixture of 80 wt.% of iron(III) oxide $Fe_2O_3$ and 20 wt.% of aluminium oxide $Al_2O_3$) was approximately 60 wt.% or 193 g of the total structured oxygen carrier product 50. Thus, the proportion of the zirconium oxide $ZrO_2$ foam used as porous support material 10 was in case of data set C approximately 40 wt.% or 124 g of the total structured oxygen carrier product 50 applied. As can be seen, the conversion rate for the set up according to data set C was also constantly high at conversion rates of 70 % and above even after 200 cycles of the chemical looping process.

Fig. 12 shows in a photograph a top view of a structured oxygen carrier product 50 according to the invention after use in a chemical looping process. Fig. 13 shows in a photograph an isometric side view of this structured oxygen carrier product 50 according to the invention. Said oxygen carrier product 50 as shown in Figures 12 and 13 having a loading density of sintered oxygen carrier particles 40 of 48 wt.%. This loading density (of 48 wt.%) corresponds to a loading proportion of sintered oxygen carrier particles 40 being arranged within the inner pore openings 12 of the porous support material 10 in the range of 60 vol.% to 70 vol.%, as determined in the laboratory tests. The structured oxygen carrier comprises of a calcium-stabilized zirconium oxide ($ZrO_2$ and 3 wt.% CaO). The oxygen carrier product comprises of iron oxide and aluminium oxide ($Fe_2O_3$ and 20 wt.% $Al_2O_3$). The gap degree of the gas-permeable gaps within the inner pore openings of the porous support material determined in the laboratory tests was in the range of 30 vol.% to 40 vol.%.

REFERENCE NUMERALS

| | |
|---|---|
| D | wall distance |
| DOM | depleted oxidation medium (e.g. air) |
| FBR | fixed bed reactor |
| FS | feedstock (e.g. synthesis gas, $H_2$, CO) |
| GF | convective gas flow (arrow) |
| LG | lean gas (e.g. $CO_2$, $H_20$) |
| OC | oxygen carrier (e.g. metal oxide) |
| OM | oxidation medium (e.g. air) |
| OXID | oxidation phase |
| $Me_xO_y$ | metal oxide |
| $Me_xO_{y-2}$ | reduced metal oxide |
| R1 | first reactor |
| R2 | second reactor |
| RED | reduction phase |
| 10 | porous support material (e.g. ceramic support structure) |
| 11 | inner pore wall of support material |
| 12 | inner pore opening of support material |
| 13 | equivalent spherical diameter of inner pore opening |
| 15 | effective porosity of support material |
| 20 | solid oxygen carrier powder |
| 21 | equivalent mean particle diameter |
| 25 | suspension |
| 26 | suspending agent |
| 27 | additive agent |
| 28 | agglomerated oxygen carrier powder |
| 30 | structured oxygen carrier intermediate |
| 40 | sintered oxygen carrier |
| 41 | equivalent diameter of sintered oxygen carrier particle |
| 42 | gas-permeable gap |
| 50 | structured oxygen carrier product |

## Claims

1. Structured oxygen carrier product (50) for use in a chemical looping process, said structured oxygen carrier product (40) comprising:

   - a porous support material (10), said porous support material (10) having a specific inner surface area being structured with inner pore walls (11) and intervening inner pore openings (12), wherein a proportion of at least 70 %, preferably at least 80 %, of said inner pore openings (12) that have an equivalent spherical diameter (13) between opposing pore walls (11) in the range of 0.5 mm to 10 mm, forms an effective porosity (15) of the porous support material (10);
   - sintered oxygen carrier particles (40) containing at least one redox active metal oxide, said sintered oxygen carrier particles (40) are arranged within the inner pore openings (12) of said porous support material (10), wherein a loading proportion of said sintered oxygen carrier particles (40) being arranged within the inner pore openings (12) of the porous support material (10) is in the range of 50 vol.% to 95 vol.%, preferably in the range of 60 vol.% to 90 vol.%, of the effective porosity (15) of the porous support material (10);
   - gas-permeable gaps (42) being arranged at least in sections between the inner pore walls (11) and the sintered oxygen carrier particles (40) that are arranged within the inner pore openings (12), wherein a gap degree of gas-permeable gaps (42) within the inner pore openings (12) of the porous support material (10) is in the range of 5 vol.% to 50 vol.%, preferably in the range of 10 vol.% to 40 vol.%.

2. Structured oxygen carrier product (50) according to claim 1, **characterised in that** the porous support material (10) having inner pore openings (12) with an equivalent spherical diameter (13) in the range of 1 mm to 5 mm.

3. Structured oxygen carrier product (50) according to one of claims 1 or 2, **characterised in that** the inner pore openings (12) of said porous support material (10) having a sphericity of at least 0.70, preferably a sphericity of at least 0.75.

**4.** Structured oxygen carrier product (50) according to any one of claims 1 to 3, **characterised in that** the porous support material (10) having inner pore openings (12) that are uncoated.

**5.** Structured oxygen carrier product (50) according to any one of claims 1 to 4, **characterised in that** the porous support material (10) is structurally inert, is temperature resistant having a melting point above 1000°C, preferably having a melting point above 1300°C, and is selected from the group comprising, preferably consisting of: ceramic material, ceramic-based material, ceramic foam, metallic material, metal-based material, metallic foam, metal-ceramic composite.

**6.** Structured oxygen carrier product (50) according to any one of claims 1 to 5, **characterised in that** the sintered oxygen carrier particles (40) are suitable to be reduced and oxidized in elevated temperature atmospheres in the range of 100°C to 1350°C, preferably in the range of 400°C to 1300°C.

**7.** Structured oxygen carrier product (50) according to any one of claims 1 to 6, **characterised in that** the at least one redox active metal oxide contained in the sintered oxygen carrier particles (40) is selected from the group comprising, preferably consisting of: Fe, Ni, Cu, W, Ca, Mn, Co, Mo, Ce, and their oxides, and/or mixtures thereof.

**8.** Structured oxygen carrier product (50) according to claim 7, **characterised in that** the sintered oxygen carrier particles (40) contains at least one dopant means that is selected from the group comprising, preferably consisting of: Na, K, Mg, Ca, Sr, Ba, Y, La, Ti, Zr, V, Cr, Mo, Al, Si, Fe, Ni, Ce, and their oxides, and/or mixtures thereof.

**9.** Structured oxygen carrier product (50) according to any one of claims 1 to 8, **characterised in that** the sintered oxygen carrier particles (40) further contain at least one material that is essentially structurally inert, wherein preferably the at least one material is selected from the group comprising or consisting of: Na, K, Mg, Ca, Sr, Ba, Y, La, Ti, Zr, V, Cr, Mo, Al, Si, Fe, Ni, Ce, and their oxides and/or mixtures thereof.

**10.** Method to prepare a structured oxygen carrier product (50) according to any one of claims 1 to 9, said method comprising the following steps:

- providing a porous support material (10), said porous support material (10) having a specific inner surface area being structured with inner pore walls (11) and intervening inner pore openings (12), wherein a proportion of at least 70 %, preferably at least 80 %, of said inner pore openings (12) that have an equivalent spherical diameter (13) between opposing pore walls (11) in the range of 0.5 mm to 10 mm, forms an effective porosity (15) of the porous support material (10);
- providing a solid oxygen carrier powder (20) containing at least one redox active metal oxide, said oxygen carrier powder (20) having an equivalent mean particle diameter (21) that is smaller than 100 $\mu$m (micrometres), preferably is in the range of 0.1 $\mu$m to 50 $\mu$m (micrometres);
- providing a suspending agent (26);
- preparing a suspension (25) containing said oxygen carrier powder (20) being suspended in said suspending agent (26), wherein the proportion of the oxygen carrier powder (20) in the suspension (25) is in the range of 60 wt.% to 95 wt.%, preferably in the range of 65 wt.% to 90 wt.%, and wherein the proportion of the suspending agent (26) in the suspension (25) is in the range of 5 wt.% to 40 wt.%, preferably in the range of 10 wt.% to 35 wt.%;
- inserting said suspension (25) containing said oxygen carrier powder (20) and suspending agent (26) into the inner pore openings (12) of the porous support material (10);
- evaporating the suspending agent (26) from the inner pore openings (12) at an elevated temperature, which temperature is selected above the evaporation temperature of the suspending agent (26), to receive an agglomerated oxygen carrier powder (28) ;
- sintering of the agglomerated oxygen carrier powder (28) within the inner pore openings (12) at an elevated sintering temperature and/or at a number of cycles of a sequence of cyclically alternating reduction processes and oxidation processes, until sintered oxygen carrier particles (40) are obtained, wherein a loading proportion of said sintered oxygen carrier particles (40) being arranged within the inner pore openings (12) of the porous support material (10) is in the range of 50 vol.% to 95 vol.%, preferably in the range of 60 vol.% to 90 vol.%, of the effective porosity (15) of the porous support material (10);
- obtaining a structured oxygen carrier product (50) having gas-permeable gaps (42) being arranged at least in sections between the inner pore walls (11) and the sintered oxygen carrier particles (40) that are formed within the inner pore openings (12), wherein a gap degree of gas-permeable gaps (42) within the inner pore openings (12) of the porous support material (10) is in the range of 5 vol.% to 50 vol.%, preferably in the range of 10 vol.% to 40 vol.%.

**11.** Method according to claim 10, **characterized in that** the porous support material (10) is a structurally inert, temperature resistant material having a melting point above 1000°C, preferably having a melting point above 1300°C, and is further selected from the group comprising, preferably consisting of: ceramic material, ceramic-based material, ceramic foam, metallic material, metal-based material, metallic foam, metal-ceramic composite.

**12.** Method according to claim 10 or 11, **characterized in that** for the step of sintering the agglomerated oxygen carrier powder (28) within the inner pore openings (12) an elevated sintering temperature in the range of 400°C to 1300°C and/or a number of one to ten cycles of cyclically alternating reduction and oxidation processes is/are selected.

**13.** Method according to any one of claims 10 to 12, **characterized in that** the prepared suspension (25) further contains at least one additive agent (27) to improve the rheological properties of the suspension (25), wherein the proportion of the at least one additive agent (27) in the suspension (25) is preferably in the range of 0.1 wt.% to 5 wt.%.

**14.** Method according to any one of claims 10 to 13, **characterized in that** the prepared suspension (25) further contains at least one dopant means and/or at least one material that is essentially structured inert, wherein the at least one dopant means and/or at least one inertly structured material is selected from the group comprising, preferably consisting of: Na, K, Mg, Ca, Sr, Ba, Y, La, Ti, Zr, V, Cr, Mo, Al, Si, Fe, Ni, Ce, and their oxides, and/or mixtures thereof.

**15.** System to prepare a structured oxygen carrier intermediate (30) as starting material that has to be sintered subsequently in order to be used in a chemical looping process, said system comprising:

- a porous support material (10), said porous support material (10) having a specific inner surface area being structured with inner pore walls (11) and intervening inner pore openings (12), wherein a proportion of at least 70 %, preferably at least 80 %, of said inner pore openings (12) have an equivalent spherical diameter (13) between opposing pore walls (11) in the range of 0.5 mm to 10 mm, wherein said proportion of inner pore openings (12) forms an effective porosity (15) of the porous support material (10);
- a solid oxygen carrier powder (20) containing at least one redox active metal oxide, said oxygen carrier powder (20) having an equivalent mean particle diameter (21) that is smaller than 100 $\mu$m (micrometer), preferably is in the range of 0.1 $\mu$m to 50 $\mu$m (micrometer);
- a suspending agent (26) suitable to prepare a suspension (25) containing said oxygen carrier powder (20).

## Patentansprüche

**1.** Strukturiertes Sauerstoffträgerprodukt (50) zur Verwendung in einem Chemical-Looping-Prozess, wobei das strukturierte Sauerstoffträgerprodukt (40) Folgendes umfasst:

- ein poröses Stützmaterial (10), wobei das poröse Stützmaterial (10) eine spezifische innere Oberfläche aufweist, die mit inneren Porenwänden (11) und dazwischenliegenden inneren Porenöffnungen (12) strukturiert ist, wobei ein Anteil von mindestens 70 %, vorzugsweise mindestens 80 %, der inneren Porenöffnungen (12), die einen äquivalenten Kugeldurchmesser (13) zwischen gegenüberliegenden Porenwänden (11) im Bereich von 0,5 mm bis 10 mm aufweisen, eine effektive Porosität (15) des porösen Stützmaterials (10) bildet;
- gesinterte Sauerstoffträgerteilchen (40), die mindestens ein redoxaktives Metalloxid enthalten, wobei die gesinterten Sauerstoffträgerteilchen (40) innerhalb der inneren Porenöffnungen (12) des porösen Stützmaterials (10) angeordnet sind, wobei ein Beladungsanteil der gesinterten Sauerstoffträgerteilchen (40), die innerhalb der inneren Porenöffnungen (12) des porösen Stützmaterials (10) angeordnet sind, im Bereich von 50 Vol.-% bis 95 Vol.-%, vorzugsweise im Bereich von 60 Vol.-% bis 90 Vol.-%, der effektiven Porosität (15) des porösen Trägermaterials (10) liegt;
- gasdurchlässige Spalte (42), die zumindest abschnittsweise zwischen den inneren Porenwänden (11) und den gesinterten Sauerstoffträgerteilchen (40), die innerhalb der inneren Porenöffnungen (12) angeordnet sind, angeordnet sind, wobei ein Spaltgrad von gasdurchlässigen Spalten (42) innerhalb der inneren Porenöffnungen (12) des porösen Stützmaterials (10) im Bereich von 5 Vol.-% bis 50 Vol.-%, vorzugsweise im Bereich von 10 Vol.-% bis 40 Vol.-%, liegt.

**2.** Strukturiertes Sauerstoffträgerprodukt (50) nach Anspruch 1, **dadurch gekennzeichnet, dass** das poröse Stützmaterial (10) innere Porenöffnungen (12) mit einem äquivalenten Kugeldurchmesser (13) im Bereich von 1 mm bis 5 mm aufweist.

3. Strukturiertes Sauerstoffträgerprodukt (50) nach Anspruch 1 oder 2, **dadurch gekennzeichnet, dass** die inneren Porenöffnungen (12) des porösen Stützmaterials (10) eine Sphärizität von mindestens 0,70, vorzugsweise eine Sphärizität von mindestens 0,75, aufweisen.

4. Strukturiertes Sauerstoffträgerprodukt (50) nach einem der Ansprüche 1 bis 3,
**dadurch gekennzeichnet, dass** das poröse Stützmaterial (10) innere Porenöffnungen (12) aufweist, die unbeschichtet sind.

5. Strukturiertes Sauerstoffträgerprodukt (50) nach einem der Ansprüche 1 bis 4,
**dadurch gekennzeichnet, dass** das poröse Stützmaterial (10) strukturell inert ist, mit einem Schmelzpunkt über 1000 °C, vorzugsweise einem Schmelzpunkt über 1300 °C, temperaturbeständig ist und ausgewählt ist aus der Gruppe, die Folgendes umfasst, vorzugsweise daraus besteht: Keramikmaterial, Material auf Keramikbasis, Keramikschaum, Metallmaterial, Material auf Metallbasis, Metallschaum, Metall-Keramik-Verbundstoff.

6. Strukturiertes Sauerstoffträgerprodukt (50) nach einem der Ansprüche 1 bis 5,
**dadurch gekennzeichnet, dass** die gesinterten Sauerstoffträgerteilchen (40) geeignet sind, um in Atmosphären mit erhöhter Temperatur im Bereich von 100 °C bis 1350 °C, vorzugsweise im Bereich von 400 °C bis 1300 °C, reduziert und oxidiert zu werden.

7. Strukturiertes Sauerstoffträgerprodukt (50) nach einem der Ansprüche 1 bis 6,
**dadurch gekennzeichnet, dass** das mindestens eine redoxaktive Metalloxid, das in den gesinterten Sauerstoffträgerteilchen (40) enthalten ist, ausgewählt ist aus der Gruppe, die Folgendes umfasst, vorzugsweise daraus besteht: Fe, Ni, Cu, W, Ca, Mn, Co, Mo, Ce und deren Oxide und/oder Gemische daraus.

8. Strukturiertes Sauerstoffträgerprodukt (50) nach Anspruch 7, **dadurch gekennzeichnet, dass** die gesinterten Sauerstoffträgerteilchen (40) mindestens ein Dotiermittel enthalten, die ausgewählt sind aus der Gruppe, die Folgendes umfasst, vorzugsweise daraus besteht: Na, K, Mg, Ca, Sr, Ba, Y, La, Ti, Zr, V, Cr, Mo, Al, Si, Fe, Ni, Ce und deren Oxide und/oder Gemische daraus.

9. Strukturiertes Sauerstoffträgerprodukt (50) nach einem der Ansprüche 1 bis 8,
**dadurch gekennzeichnet, dass** die gesinterten Sauerstoffträgerteilchen (40) ferner mindestens ein Material enthalten, das im Wesentlichen strukturell inert ist, wobei vorzugsweise das mindestens eine Material ausgewählt ist aus der Gruppe, die Folgendes umfasst oder daraus besteht: Na, K, Mg, Ca, Sr, Ba, Y, La, Ti, Zr, V, Cr, Mo, Al, Si, Fe, Ni, Ce und deren Oxide und/oder Gemische daraus.

10. Verfahren zum Herstellen eines strukturierten Sauerstoffträgerprodukts (50) nach einem der Ansprüche 1 bis 9, wobei das Verfahren die folgenden Schritte umfasst:

- Bereitstellen eines porösen Stützmaterials (10), wobei das poröse Stützmaterial (10) eine spezifische innere Oberfläche aufweist, die mit inneren Porenwänden (11) und dazwischenliegenden inneren Porenöffnungen (12) strukturiert ist, wobei ein Anteil von mindestens 70 %, vorzugsweise mindestens 80 %, der inneren Porenöffnungen (12), die einen äquivalenten Kugeldurchmesser (13) zwischen gegenüberliegenden Porenwänden (11) im Bereich von 0,5 mm bis 10 mm aufweisen, eine effektive Porosität (15) des porösen Stützmaterials (10) bildet;
- Bereitstellen eines festen Sauerstoffträgerpulvers (20), das mindestens ein redoxaktives Metalloxid enthält, wobei das Sauerstoffträgerpulver (20) einen äquivalenten mittleren Teilchendurchmesser (21) aufweist, der kleiner als 100 $\mu$m (Mikrometer) ist, vorzugsweise im Bereich von 0,1 $\mu$m bis 50 $\mu$m (Mikrometern) liegt;
- Bereitstellen eines Suspendiermittels (26);
- Herstellen einer Suspension (25), die das Sauerstoffträgerpulver (20) enthält, das in dem Suspendiermittel (26) suspendiert ist, wobei der Anteil des Sauerstoffträgerpulvers (20) in der Suspension (25) im Bereich von 60 Gew.-% bis 95 Gew.-%, vorzugsweise im Bereich von 65 Gew.-% bis 90 Gew.-%, liegt, und wobei der Anteil des Suspendiermittels (26) in der Suspension (25) im Bereich von 5 Gew.-% bis 40 Gew.-%, vorzugsweise im Bereich von 10 Gew.-% bis 35 Gew.-%, liegt;
- Einbringen der Suspension (25), die das Sauerstoffträgerpulver (20) und das Suspendiermittel (26) enthält, in die inneren Porenöffnungen (12) des porösen Stützmaterials (10);
- Verdampfenlassen des Suspendiermittels (26) aus den inneren Porenöffnungen (12) bei einer erhöhten Temperatur, wobei die Temperatur über der Verdampfungstemperatur des Suspendiermittels (26) ausgewählt ist, um ein agglomeriertes Sauerstoffträgerpulver (28) zu erhalten;
- Sintern des agglomerierten Sauerstoffträgerpulvers (28) innerhalb der inneren Porenöffnungen (12) bei einer

erhöhten Sintertemperatur und/oder bei einer Anzahl von Zyklen einer Sequenz von zyklisch wechselnden Reduktionsprozessen und Oxidationsprozessen, bis gesinterte Sauerstoffträgerteilchen (40) erhalten werden, wobei ein Beladungsanteil der gesinterten Sauerstoffträgerteilchen (40), die innerhalb der inneren Porenöffnungen (12) des porösen Stützmaterials (10) angeordnet sind, im Bereich von 50 Vol.-% bis 95 Vol.-%, vorzugsweise im Bereich von 60 Vol.-% bis 90 Vol.-%, der effektiven Porosität (15) des porösen Stützmaterials (10) liegt;
- Erhalten eines strukturierten Sauerstoffträgerprodukts (50) mit gasdurchlässigen Spalten (42), die zumindest abschnittsweise zwischen den inneren Porenwänden (11) und den gesinterten Sauerstoffträgerteilchen (40), die innerhalb der inneren Porenöffnungen (12) gebildet sind, angeordnet sind, wobei ein Spaltgrad von gasdurchlässigen Spalten (42) innerhalb der inneren Porenöffnungen (12) des porösen Stützmaterials (10) im Bereich von 5 Vol.-% bis 50 Vol.-%, vorzugsweise im Bereich von 10 Vol.-% bis 40 Vol.-%, liegt.

**11.** Verfahren nach Anspruch 10, **dadurch gekennzeichnet, dass** das poröse Stützmaterial (10) ein strukturell inertes, temperaturbeständiges Material mit einem Schmelzpunkt über 1000 °C, vorzugsweise einem Schmelzpunkt über 1300 °C, ist und ferner ausgewählt ist aus der Gruppe, die Folgendes umfasst, vorzugsweise daraus besteht: Keramikmaterial, Material auf Keramikbasis, Keramikschaum, Metallmaterial, Material auf Metallbasis, Metallschaum, Metall-Keramik-Verbundstoff.

**12.** Verfahren nach Anspruch 10 oder 11, **dadurch gekennzeichnet, dass** bei dem Schritt des Sinterns des agglomerierten Sauerstoffträgerpulvers (28) innerhalb der inneren Porenöffnungen (12) eine erhöhte Sintertemperatur im Bereich von 400 °C bis 1300 °C und/oder eine Anzahl von einem bis zehn Zyklen von zyklisch wechselnden Reduktions- und Oxidationsprozessen ausgewählt wird/werden.

**13.** Verfahren nach einem der Ansprüche 10 bis 12, **dadurch gekennzeichnet, dass** die hergestellte Suspension (25) ferner mindestens ein Additivmittel (27) enthält, um die rheologischen Eigenschaften der Suspension (25) zu verbessern, wobei der Anteil des mindestens einen Additivmittels (27) in der Suspension (25) vorzugsweise im Bereich von 0,1 Gew.-% bis 5 Gew.-% liegt.

**14.** Verfahren nach einem der Ansprüche 10 bis 13, **dadurch gekennzeichnet, dass** die hergestellte Suspension (25) ferner mindestens ein Dotiermittel und/oder mindestens ein Material enthält, das im Wesentlichen strukturiert inert ist, wobei das mindestens eine Dotiermittel und/oder mindestens eine inert strukturierte Material ausgewählt ist aus der Gruppe, die Folgendes umfasst, vorzugsweise daraus besteht: Na, K, Mg, Ca, Sr, Ba, Y, La, Ti, Zr, V, Cr, Mo, Al, Si, Fe, Ni, Ce und deren Oxide und/oder Gemische daraus.

**15.** System zum Herstellen eines strukturierten Sauerstoffträgerzwischenprodukts (30) als Ausgangsmaterial, das anschließend zu sintern ist, um in einem Chemical-Looping-Prozess verwendet zu werden, wobei das System Folgendes umfasst:

- ein poröses Stützmaterial (10), wobei das poröse Stützmaterial (10) eine spezifische innere Oberfläche aufweist, die mit inneren Porenwänden (11) und dazwischenliegenden inneren Porenöffnungen (12) strukturiert ist, wobei ein Anteil von mindestens 70 %, vorzugsweise mindestens 80 %, der inneren Porenöffnungen (12) einen äquivalenten Kugeldurchmesser (13) zwischen gegenüberliegenden Porenwänden (11) im Bereich von 0,5 mm bis 10 mm aufweist, wobei der besagte Anteil der inneren Porenöffnungen (12) eine effektive Porosität (15) des porösen Stützmaterials (10) bildet;
- ein festes Sauerstoffträgerpulver (20), das mindestens ein redoxaktives Metalloxid enthält, wobei das Sauerstoffträgerpulver (20) einen äquivalenten mittleren Teilchendurchmesser (21) aufweist, der kleiner als 100 $\mu$m (Mikrometer) ist, vorzugsweise im Bereich von 0,1 $\mu$m bis 50 $\mu$m (Mikrometern) liegt;
- ein Suspendiermittel (26), das geeignet ist, um eine Suspension (25) herzustellen, die das Sauerstoffträgerpulver (20) enthält.

## Revendications

**1.** Produit transporteur d'oxygène structuré (50) pour une utilisation dans un processus de boucle chimique, ledit produit transporteur d'oxygène structuré (40) comprenant :

- un matériau de support poreux (10), ledit matériau de support poreux (10) ayant une aire interne spécifique structurée avec des parois de pore internes (11) et des ouvertures de pore internes interposées (12), dans lequel une proportion d'au moins 70 %, de préférence d'au moins 80 %, desdites ouvertures de pore internes (12) qui ont

un diamètre sphérique équivalent (13) entre des parois de pore (11) opposées dans la plage de 0,5 mm à 10 mm, forme une porosité effective (15) du matériau de support poreux (10) ;
- des particules transporteuses d'oxygène frittées (40) contenant au moins un oxyde métallique à activité redox, lesdites particules transporteuses d'oxygène frittées (40) étant agencées au sein des ouvertures de pore internes (12) dudit matériau de support poreux (10), dans lequel une proportion de charge desdites particules transporteuses d'oxygène frittées (40) agencées au sein des ouvertures de pore internes (12) du matériau de support poreux (10) est dans la plage de 50 % en volume à 95 % en volume, de préférence dans la plage de 60 % en volume à 90 % en volume, de la porosité effective (15) du matériau de support poreux (10) ;
- des espaces perméables aux gaz (42) agencés au moins en sections entre les parois de pore internes (11) et les particules transporteuses d'oxygène frittées (40) qui sont agencées au sein des ouvertures de pore internes (12), dans lequel un degré d'espace des espaces perméables aux gaz (42) au sein des ouvertures de pore internes (12) du matériau de support poreux (10) est dans la plage de 5 % en volume à 50 % en volume, de préférence dans la plage de 10 % en volume à 40 % en volume.

2. Produit transporteur d'oxygène structuré (50) selon la revendication 1, **caractérisé en ce que** le matériau de support poreux (10) a des ouvertures de pore internes (12) avec un diamètre sphérique équivalent (13) dans la plage de 1 mm à 5 mm.

3. Produit transporteur d'oxygène structuré (50) selon l'une des revendications 1 ou 2, **caractérisé en ce que** les ouvertures de pore internes (12) dudit matériau de support poreux (10) ont une sphéricité d'au moins 0,70, de préférence une sphéricité d'au moins 0,75.

4. Produit transporteur d'oxygène structuré (50) selon l'une quelconque des revendications 1 à 3, **caractérisé en ce que** le matériau de support poreux (10) a des ouvertures de pore internes (12) non revêtues.

5. Produit transporteur d'oxygène structuré (50) selon l'une quelconque des revendications 1 à 4, **caractérisé en ce que** le matériau de support poreux (10) est structurellement inerte, est résistant à la température avec un point de fusion supérieur à 1000 °C, de préférence avec un point de fusion supérieur à 1300 °C, et est choisi dans le groupe comprenant, de préférence constitué par : un matériau céramique, un matériau à base de céramique, une mousse céramique, un matériau métallique, un matériau à base de métal, une mousse métallique, un composite métal-céramique.

6. Produit transporteur d'oxygène structuré (50) selon l'une quelconque des revendications 1 à 5, **caractérisé en ce que** les particules transporteuses d'oxygène frittées (40) sont adaptées pour être réduites et oxydées dans des atmosphères à température élevée dans la plage de 100 °C à 1350 °C, de préférence dans la plage de 400 °C à 1300 °C.

7. Produit transporteur d'oxygène structuré (50) selon l'une quelconque des revendications 1 à 6, **caractérisé en ce que** l'au moins un oxyde métallique à activité redox contenu dans les particules transporteuses d'oxygène frittées (40) est choisi dans le groupe comprenant, de préférence constitué par : Fe, Ni, Cu, W, Ca, Mn, Co, Mo, Ce et leurs oxydes, et/ou les mélanges de ceux-ci.

8. Produit transporteur d'oxygène structuré (50) selon la revendication 7, **caractérisé en ce que** les particules transporteuses d'oxygène frittées (40) contiennent au moins un moyen dopant qui est choisi dans le groupe comprenant, de préférence constitué par : Na, K, Mg, Ca, Sr, Ba, Y, La, Ti, Zr, V, Cr, Mo, Al, Si, Fe, Ni, Ce et leurs oxydes, et/ou les mélanges de ceux-ci.

9. Produit transporteur d'oxygène structuré (50) selon l'une quelconque des revendications 1 à 8, **caractérisé en ce que** les particules transporteuses d'oxygène frittées (40) contiennent en outre au moins un matériau qui est essentiellement structurellement inerte, dans lequel de préférence l'au moins un matériau est choisi dans le groupe comprenant ou constitué par : Na, K, Mg, Ca, Sr, Ba, Y, La, Ti, Zr, V, Cr, Mo, Al, Si, Fe, Ni, Ce et leurs oxydes et/ou les mélanges de ceux-ci.

10. Procédé de préparation d'un produit transporteur d'oxygène structuré (50) selon l'une quelconque des revendications 1 à 9, ledit procédé comprenant les étapes suivantes consistant à :

- se munir d'un matériau de support poreux (10), ledit matériau de support poreux (10) ayant une aire interne spécifique structurée avec des parois de pore internes (11) et des ouvertures de pore internes interposées (12),

dans lequel une proportion d’au moins 70 %, de préférence d’au moins 80 %, desdites ouvertures de pore internes (12) qui ont un diamètre sphérique équivalent (13) entre des parois de pore (11) opposées dans la plage de 0,5 mm à 10 mm, forme une porosité effective (15) du matériau de support poreux (10) ;
- se munir d’une poudre de transporteur d’oxygène solide (20) contenant au moins un oxyde métallique à activité redox, ladite poudre de transporteur d’oxygène (20) ayant un diamètre de particule moyen équivalent (21) qui est inférieure à 100 μm (micromètres), de préférence est dans la plage de 0,1 μm à 50 μm (micromètres) ;
- se munir d’un agent de suspension (26) ;
- préparer une suspension (25) contenant ladite poudre de transporteur d’oxygène (20) suspendue dans ledit agent de suspension (26), dans lequel la proportion de la poudre de transporteur d’oxygène (20) dans la suspension (25) est dans la plage de 60 % en poids à 95 % en poids, de préférence dans la plage de 65 % en poids à 90 % en poids, et dans lequel la proportion de l’agent de suspension (26) dans la suspension (25) est dans la plage de 5 % en poids à 40 % en poids, de préférence dans la plage de 10 % en poids à 35 % en poids ;
- insérer ladite suspension (25) contenant ladite poudre de transporteur d’oxygène (20) et ledit agent de suspension (26) dans les ouvertures de pore internes (12) du matériau de support poreux (10) ;
- évaporer l’agent de suspension (26) depuis les ouvertures de pore internes (12) à une température supérieure à l’ambiante, laquelle température est choisie de manière à être au-dessus de la température d’évaporation de l’agent de suspension (26), pour recevoir une poudre de transporteur d’oxygène agglomérée (28) ;
- fritter la poudre de transporteur d’oxygène agglomérée (28) au sein des ouvertures de pore internes (12) à une température de frittage supérieure à l’ambiante et/ou avec un nombre de cycles d’une séquence de processus de réduction et de processus d’oxydation alternés de manière cyclique, jusqu’à ce que des particules transporteuses d’oxygène frittées (40) soient obtenues, dans lequel une proportion de charge desdites particules transporteuses d’oxygène frittées (40) agencées au sein des ouvertures de pore internes (12) du matériau de support poreux (10) est dans la plage de 50 % en volume à 95 % en volume, de préférence dans la plage de 60 % en volume à 90 % en volume, de la porosité effective (15) du matériau de support poreux (10) ;
- obtenir un produit transporteur d’oxygène structuré (50) ayant des espaces perméables aux gaz (42) agencés au moins en sections entre les parois de pore internes (11) et les particules transporteuses d’oxygène frittées (40) qui sont formées au sein des ouvertures de pore internes (12), dans lequel un degré d’espace des espaces perméables aux gaz (42) au sein des ouvertures de pore internes (12) du matériau de support poreux (10) est dans la plage de 5 % en volume à 50 % en volume, de préférence dans la plage de 10 % en volume à 40 % en volume.

**11.** Procédé selon la revendication 10, **caractérisé en ce que** le matériau de support poreux (10) est un matériau structurellement inerte et résistant à la température avec un point de fusion supérieur à 1000 °C, de préférence avec un point de fusion supérieur à 1300 °C, et est en outre choisi dans le groupe comprenant, de préférence constitué par : un matériau céramique, un matériau à base de céramique, une mousse céramique, un matériau métallique, un matériau à base de métal, une mousse métallique, un composite métal-céramique.

**12.** Procédé selon la revendication 10 ou 11, **caractérisé en ce que** pour l’étape consistant à fritter la poudre de transporteur d’oxygène agglomérée (28) au sein des ouvertures de pore internes (12) une température de frittage supérieure à l’ambiante dans la plage de 400 °C à 1300 °C et/ou un nombre de cycles de processus de réduction et d’oxydation alternés de manière cyclique de un à dix sont choisis.

**13.** Procédé selon l’une quelconque des revendications 10 à 12, **caractérisé en ce que** la suspension préparée (25) contient en outre au moins un agent additif (27) destiné à améliorer les propriétés rhéologiques de la suspension (25), dans lequel la proportion de l’au moins un agent additif (27) dans la suspension (25) est de préférence dans la plage de 0,1 % en poids à 5 % en poids.

**14.** Procédé selon l’une quelconque des revendications 10 à 13, **caractérisé en ce que** la suspension préparée (25) contient en outre au moins un moyen dopant et/ou au moins un matériau qui est essentiellement structuré inerte, dans lequel l’au moins un moyen dopant et/ou l’au moins un matériau structuré inerte et choisi dans le groupe comprenant, de préférence constitué par : Na, K, Mg, Ca, Sr, Ba, Y, La, Ti, Zr, V, Cr, Mo, Al, Si, Fe, Ni, Ce et leurs oxydes, et/ou les mélanges de ceux-ci.

**15.** Système destiné à préparer un intermédiaire transporteur d’oxygène structuré (30) en tant que produit de départ qui doit être ultérieurement fritté pour être utilisé dans un processus de boucle chimique, ledit système comprenant :

- un matériau de support poreux (10), ledit matériau de support poreux (10) ayant une aire interne spécifique structurée avec des parois de pore internes (11) et des ouvertures de pore internes interposées (12), dans lequel

une proportion d'au moins 70 %, de préférence d'au moins 80 %, desdites ouvertures de pore internes (12) qui ont un diamètre sphérique équivalent (13) entre des parois de pore (11) opposées dans la plage de 0,5 mm à 10 mm, dans lequel ladite proportion d'ouvertures de pore internes (12) forme une porosité effective (15) du matériau de support poreux (10) ;
- une poudre de transporteur d'oxygène solide (20) contenant au moins un oxyde métallique à activité redox, ladite poudre de transporteur d'oxygène (20) ayant une granulométrie moyenne équivalente (21) qui est inférieure à 100 μm (micromètres), de préférence est dans la plage de 0,1 μm à 50 μm (micromètres) ;
- un agent de suspension (26) adapté pour préparer une suspension (25) contenant ladite poudre de transporteur d'oxygène (20).

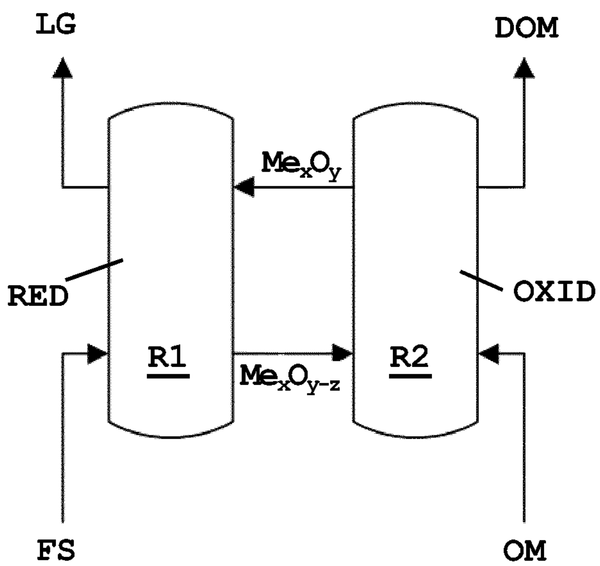
LG
DOM
$Me_xO_y$
RED
OXID
R1
R2
$Me_xO_{y-z}$
FS
OM

Fig. 1

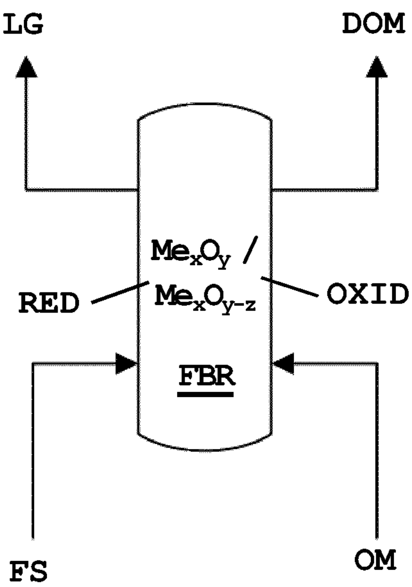
LG
DOM
$Me_xO_y$ /
$Me_xO_{y-z}$
RED
OXID
FBR
FS
OM

Fig. 2

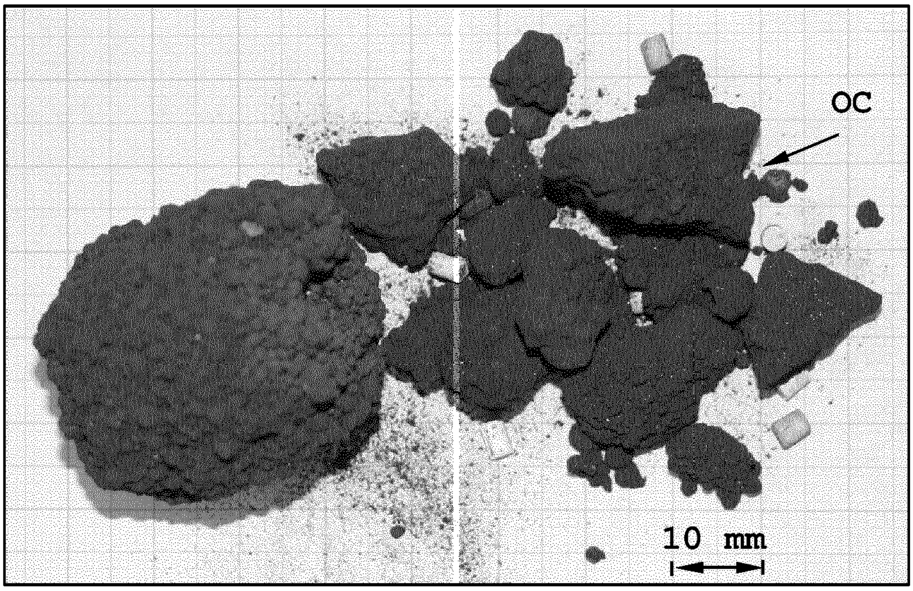


Fig. 3

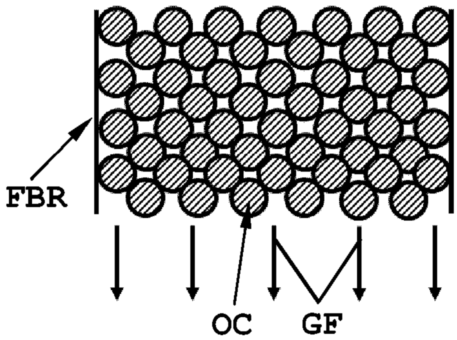


Fig. 4A

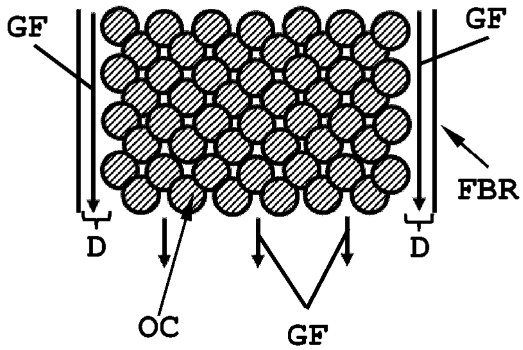


Fig. 4B

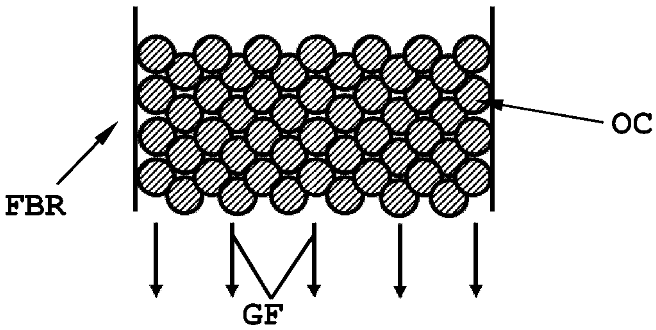


Fig. 4C

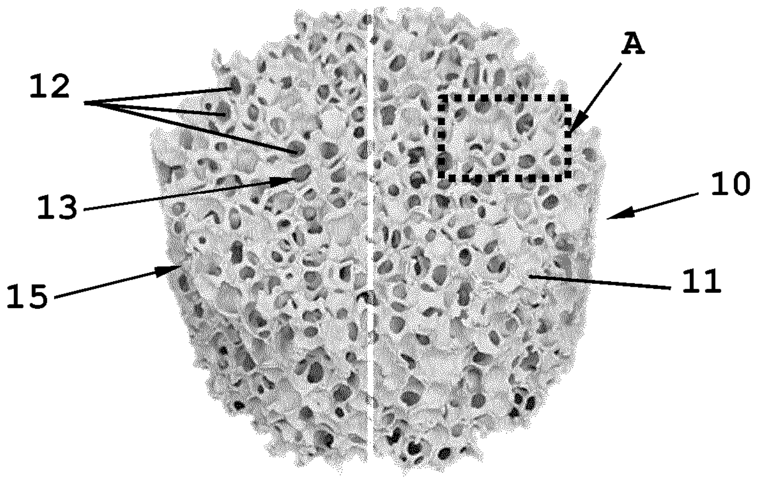


Fig. 5

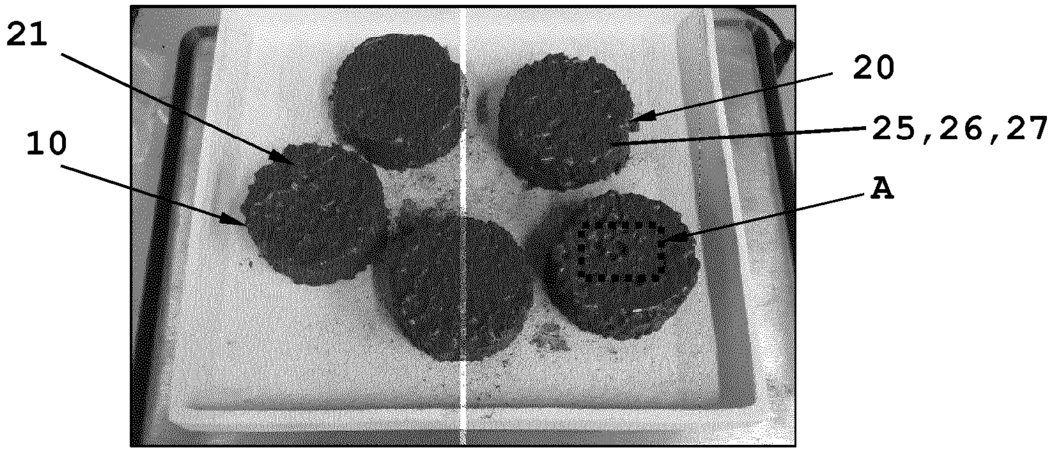


Fig. 6

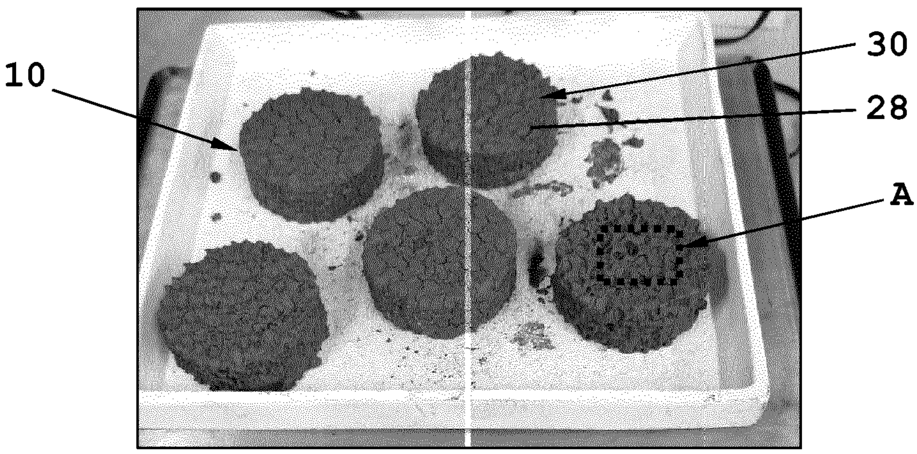


Fig. 7

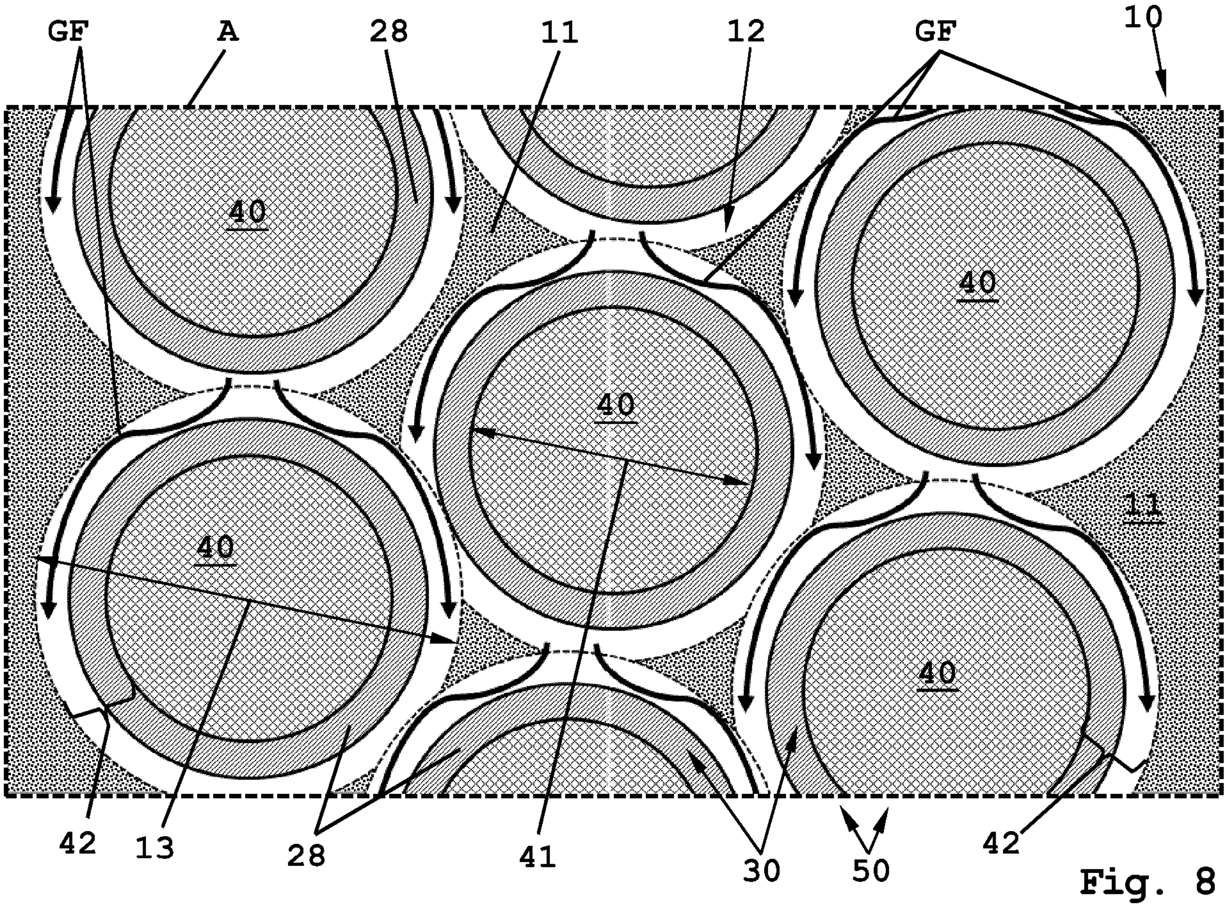


Fig. 8

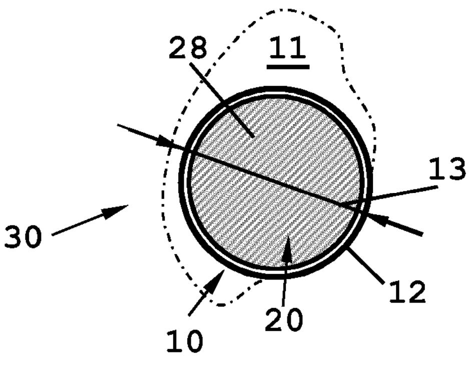


Fig. 9

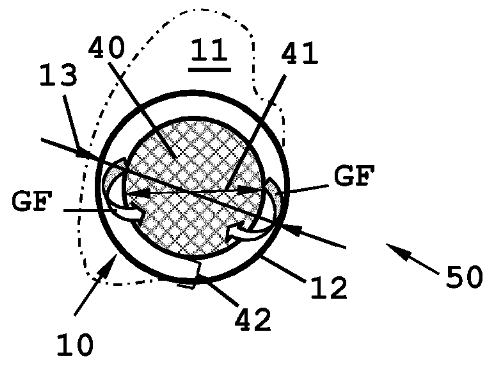


Fig. 10

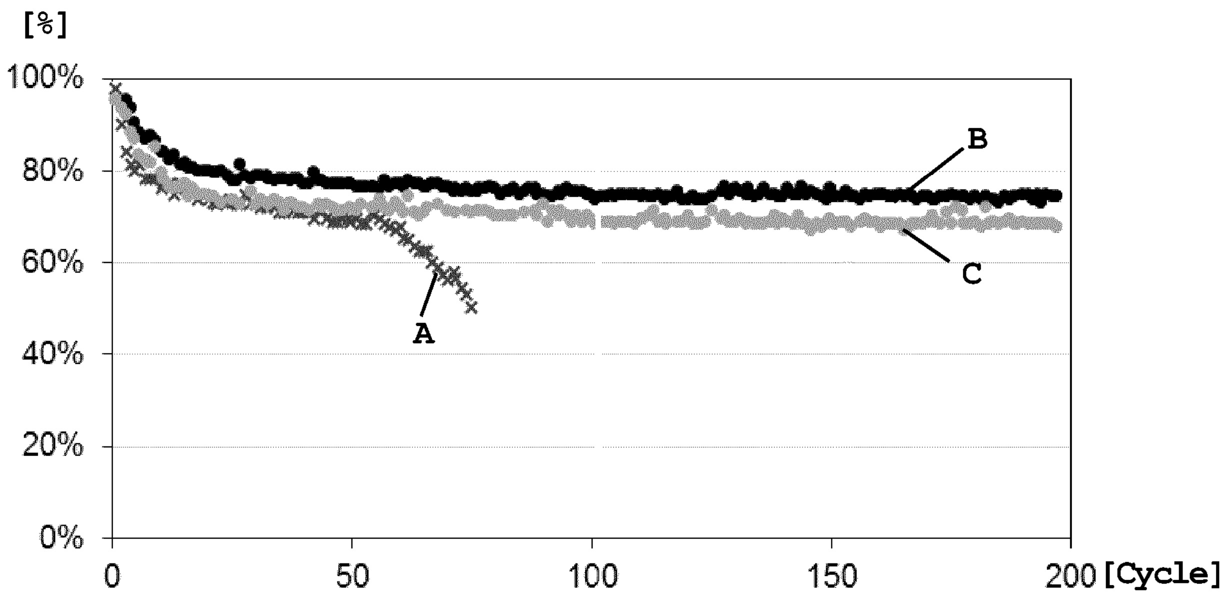


Fig. 11

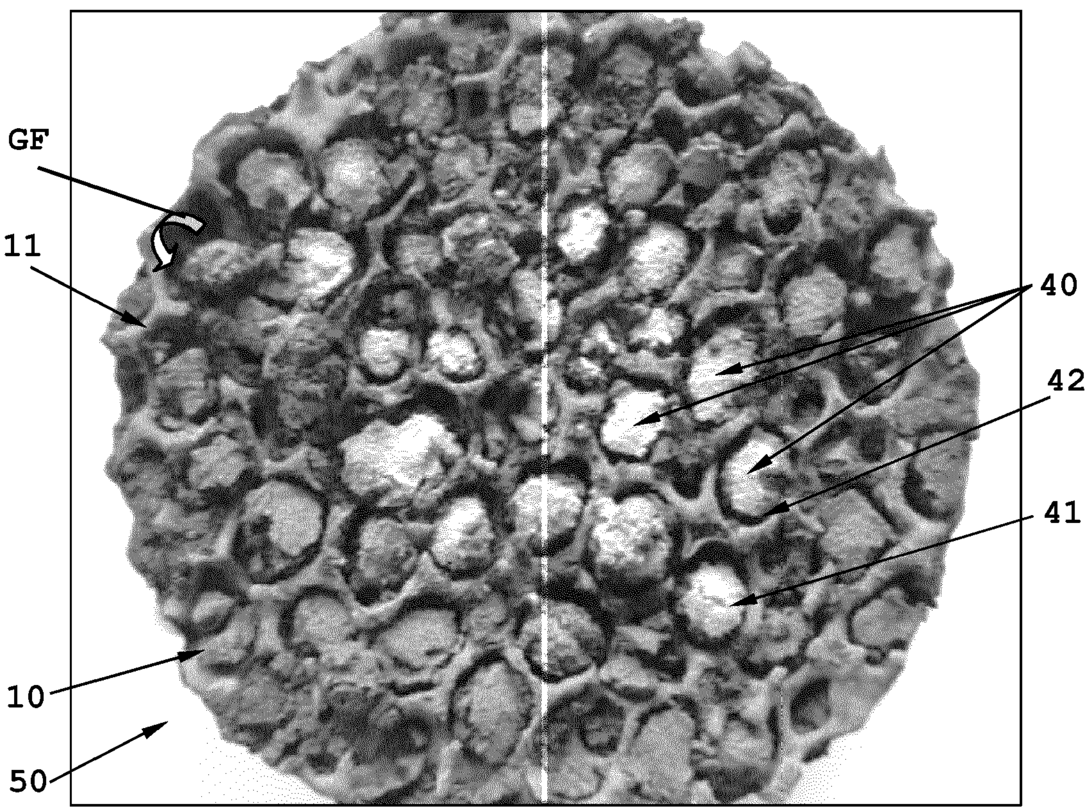


Fig. 12

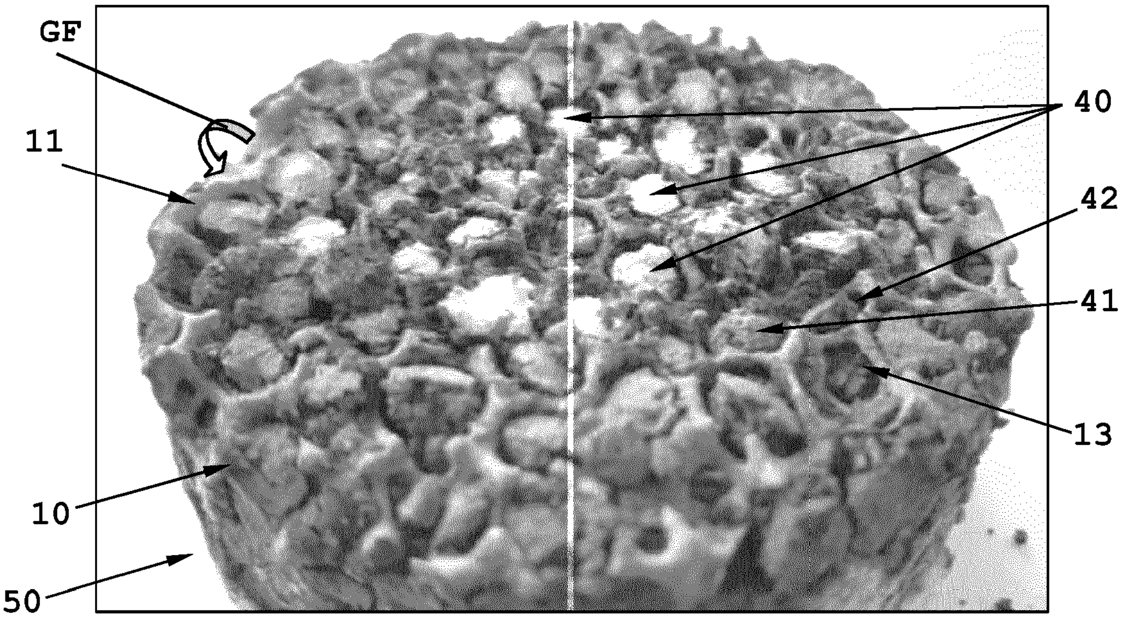


Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2019388874 A1